# EUROPEAN PATENT APPLICATION

(11) **EP 4 787 124 A1**
(43) Date of publication of application: **05.08.2026**
(21) Application number: 24894475.3
(22) Date of filing: 07.11.2024
(51) Int. Cl.: G06F 3/01, G01S 17/08, G06F 3/00, G06F 1/16, G01S 17/86, G01S 7/497, G06T 7/521, G02B 27/01, G06T 7/70

(54) **APPARATUS AND METHOD FOR MEASURING DISTANCE TO EXTERNAL OBJECT**

(30) Priority: 23.11.2023 KR 20230164937; 19.02.2024 KR 20240023273; 17.04.2024 KR 20240051311
(71) Applicant: Samsung Electronics Co., Ltd., Suwon-si, Gyeonggi-do 16677 (KR)
(72) Inventor: DO, Wonjoon, Suwon-si, Gyeonggi-do 16677 (KR); YOO, Dongheon, Suwon-si, Gyeonggi-do 16677 (KR); YEOM, Donghyun, Suwon-si, Gyeonggi-do 16677 (KR); KIM, Kihwan, Suwon-si, Gyeonggi-do 16677 (KR); KIM, Sungoh, Suwon-si, Gyeonggi-do 16677 (KR)
(74) Representative: HGF
(86) International application number: PCT/KR2024/017500
(87) International publication number: WO 2025/110582

(57) **Abstract**

A wearable device may comprise: a memory that stores instructions; at least one processor; a first distance sensor and a second distance sensor; a camera system; and a display system. The instructions, when executed individually or collectively by the at least one processor, may cause the wearable device to: identify the distance to an external object by using images of an external environment; if the distance is greater than or equal to a first reference distance and less than a second reference distance, identify the corrected distance to the external object on the basis of first distance information acquired through the first distance sensor, second distance information acquired through the second distance sensor, and the distance; and display one or more images modified such that a visual object image corresponding to the external object appears to be located at a depth according to the corrected distance.

## Description

### [Technical Field]

The following descriptions relate to a device and method for measuring a distance with respect to an external object.

### [Background Art]

In order to provide an enhanced user experience, an electronic device may provide extended reality service that display information generated by a computer in connection with an external object in the real world or a virtual object in the virtual world. The electronic device may include a wearable device that may be worn by a user. For example, the electronic device may include user equipment, augmented reality (AR) glasses, virtual reality (VR) glasses, and/or a head-mounted device (HMD) (e.g., video see through (VST) HMD and optical see through (OST) HMD).

### [Disclosure]

### [Technical Solution]

A wearable device may comprise memory, including one or more storage media, storing instructions. The wearable device may comprise at least one processor including processing circuitry. The wearable device may comprise a plurality of sensors including a first distance sensor and a second distance sensor. The wearable device may comprise a camera system including a plurality of cameras. The wearable device may comprise a display system including a first display and a second display. The instructions, when executed by the at least one processor individually or collectively, may cause the wearable device to identify, by using images of an external environment obtained through the camera system, a distance from a reference position to an external object in the external environment. The instructions, when executed by the at least one processor individually or collectively, may cause the wearable device to identify, in case that the distance is greater than or equal to a first reference distance and is less than a second reference distance greater than the first reference distance, a corrected distance from the reference position to the external object based on the distance, first distance information of the external object obtained through the first distance sensor, and second distance information of the external object obtained through the second distance sensor. The instructions, when executed by the at least one processor individually or collectively, may cause the wearable device to display, through the display system, one or more modified images such that a visual object image corresponding to the external object appears as being positioned at a depth according to the corrected distance.

A method performed by a wearable device may comprise identifying, by using images of an external environment obtained through a camera system including a plurality of cameras of the wearable device, a distance from a reference position to an external object in the external environment. The method may comprise, in case that the distance is greater than or equal to a first reference distance and is less than a second reference distance greater than the first reference distance, identifying a corrected distance from the reference position to the external object based on the distance, first distance information of the external object obtained through a first distance sensor of the wearable device, and second distance information of the external object obtained through a second distance sensor of the wearable device. The method may comprise displaying one or more modified images such that a visual object image corresponding to the external object appears as being positioned at a depth according to the corrected distance.

A non-transitory computer-readable storage medium, when individually or collectively executed by at least one processor of a wearable device comprising a plurality of sensors comprising a first distance sensor and a second distance sensor, a camera system including a plurality of cameras, and a display system including a first display and a second display, may store one or more programs including instructions that cause the wearable device to identify, by using images of an external environment obtained through the camera system, a distance from a reference position to an external object in the external environment. The non-transitory computer-readable storage medium, when individually or collectively executed by the at least one processor, may store one or more programs including instructions that cause the wearable device to compare the distance to the external object and a plurality of references associated with measurable distances of the sensors. The non-transitory computer-readable storage medium, when individually or collectively executed by the at least one processor, may store one or more programs including instructions that cause the wearable device to identify a corrected distance from the reference position to the external object using the distance to the external object and sensor information of the sensors. The non-transitory computer-readable storage medium, when individually or collectively executed by the at least one processor, may store one or more programs including instructions that cause the wearable device to display, through the display system, one or more modified images such that a visual object image corresponding to the external object appears as being positioned at a depth according to the corrected distance.

### BRIEF DESCRIPTION OF THE DRAWINGS

FIG. 1 is a block diagram of an electronic device in a network environment according to various embodiments.
FIG. 2A illustrates an example of a perspective view of a wearable device according to various embodiments.
FIG. 2B illustrates an example of one or more hardware components disposed in a wearable device according to various embodiments.
FIGS. 3A and 3B illustrate an example of appearance of a wearable device according to various embodiments.
FIG. 4 illustrates an example for a method of measuring a distance to an external object according to a position of the external object.
FIG. 5 illustrates an exemplary block diagram of a wearable device.
FIGS. 6A, 6B, and 6C illustrate examples for a method of measuring a distance to an external object.
FIG. 7 illustrates an example of an operation flow for a method in which a wearable device identifies a corrected distance according to a distance to an external object measured through a red-green-blue (RGB) camera and displays an image.
FIG. 8A illustrates an example of a saliency map.
FIGS. 8B and 8C illustrate examples of an operation flow for a method in which a wearable device identifies a corrected distance by using a weight based on a saliency map.
FIG. 9 illustrates an example of a speed measuring a distance by at least one sensor.
FIG. 10 illustrates an example of an operation flow for a method in which a wearable device identifies a corrected distance to an external object by using a plurality of sensors and at least one camera and displays an image.
FIG. 11 illustrates an example of an operation flow for a method in which a wearable device identifies a corrected distance to an external object through comparison between a distance to the external object obtained by using at least one camera and a plurality of references and displays an image.

### [Mode for Invention]

Terms used in the present disclosure are used only to describe a specific embodiment, and may not be intended to limit the scope of another embodiment. A singular expression may include a plural expression unless it is clearly meant differently in the context. The terms used herein, including a technical or scientific term, may have the same meaning as generally understood by a person having ordinary knowledge in the technical field described in the present disclosure. Terms defined in a general dictionary among the terms used in the present disclosure may be interpreted with the same or similar meaning as a contextual meaning of related technology, and unless clearly defined in the present disclosure, it is not interpreted in an ideal or excessively formal meaning. In some cases, even terms defined in the present disclosure cannot be interpreted to exclude embodiments of the present disclosure.

In various embodiments of the present disclosure described below, a hardware approach is described as an example. However, since the various embodiments of the present disclosure include technology that use both hardware and software, the various embodiments of the present disclosure do not exclude a software-based approach.

In addition, in the present disclosure, in order to determine whether a specific condition is satisfied or fulfilled, an expression of more than or less than may be used, but this is only a description for expressing an example, and does not exclude description of more than or equal to or less than or equal to. A condition described as 'more than or equal to' may be replaced with ' more than', a condition described as 'less than or equal to' may be replaced with 'less than', and a condition described as 'more than or equal to and less than' may be replaced with 'more than and less than or equal to'. In addition, hereinafter, 'A' to 'B' means at least one of elements from A (including A) and to B (including B).

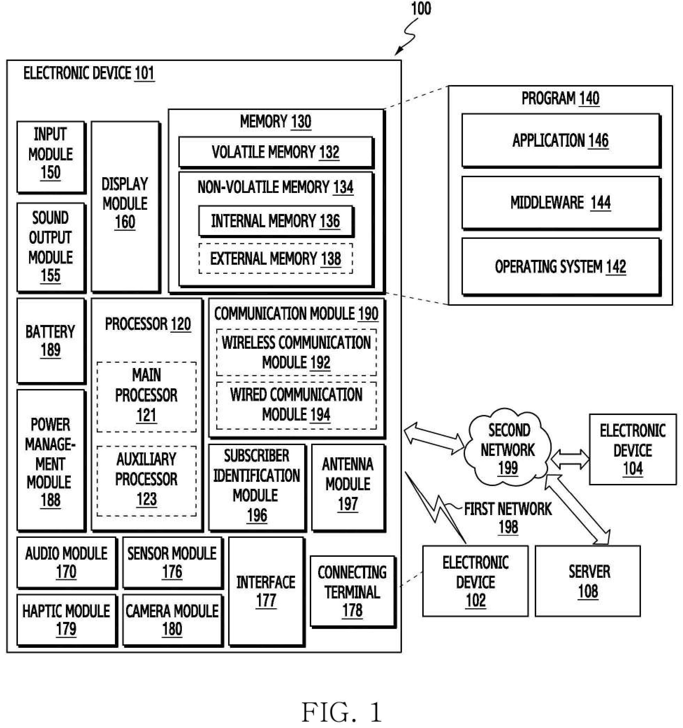

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

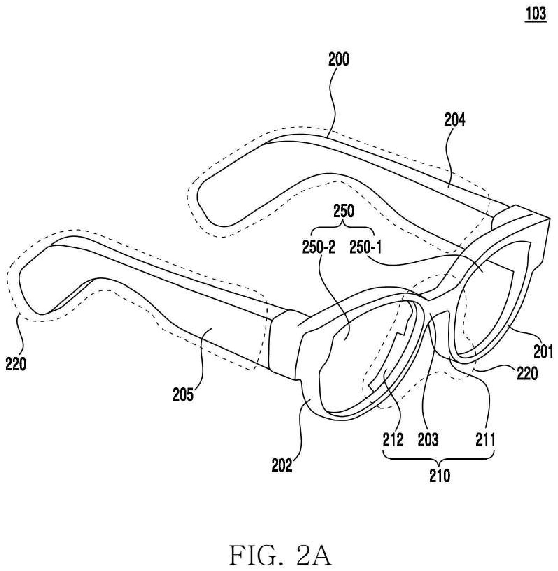

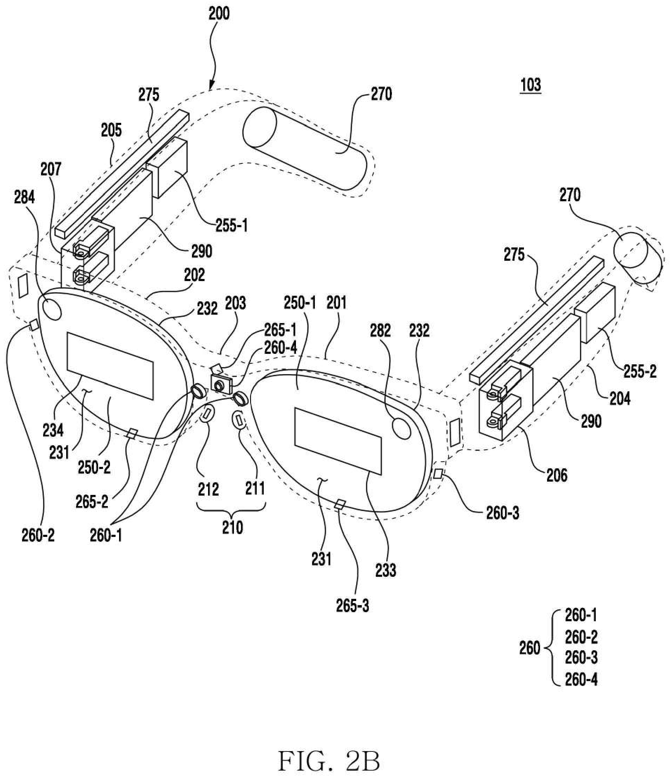

FIG. 2A illustrates an example of a perspective view of a wearable device according to various embodiments. FIG. 2B illustrates an example of one or more hardware components disposed in a wearable device according to various embodiments.

According to an embodiment, a wearable device 103 may have a shape of glasses wearable on a user's body part (e.g., head). The wearable device 103 of FIGS. 2A and 2B may be an example of the electronic device 101 of FIG. 1. The wearable device 103 may include a head-mounted display (HMD). For example, a housing of the wearable device 103 may include flexible materials such as rubber and/or silicone that are in close contact with a part (e.g., a part of the face surrounding both eyes) of the user's head. For example, the housing of the wearable device 103 may include one or more straps able to be twined around the user's head and/or one or more temples attachable to the head's ear.

Referring to FIG. 2A, the wearable device 103 according to an embodiment may include at least one display 250 and a frame 200 supporting the at least one display 250.

According to an embodiment, the wearable device 103 may be wearable on a portion of the user's body. The wearable device 103 may provide extended reality (XR) to a user wearing the wearable device 103. The XR may provide augmented reality (AR), virtual reality (VR), or mixed reality (MR) combining the augmented reality and the virtual reality. For example, the wearable device 103 may display a virtual reality image provided from at least one optical device 282 and 284 of FIG. 2B on at least one display 250, in response to a user's preset gesture obtained through a motion recognition camera 260-2 and 260-3 of FIG. 2B.

According to an embodiment, the at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may provide visual information transmitted from external light to a user and other visual information distinguished from the above visual information, through a lens included in at least one display 250. The lens may be formed based on at least one of a fresnel lens, a pancake lens, or a multi-channel lens. For example, the at least one display 250 may include a first surface 231 and a second surface 232 opposite to the first surface 231. A display area may be formed on the second surface 232 of at least one display 250. When the user wears the wearable device 103, ambient light may be transmitted to the user by being incident on the first surface 231 and being penetrated through the second surface 232. For another example, the at least one display 250 may display an augmented reality image in which a virtual reality image provided by the at least one optical device 282 and 284 is combined with a reality screen transmitted through external light, on a display area formed on the second surface 232.

According to an embodiment, the at least one display 250 may include at least one waveguide 233 and 234 that transmits light transmitted from the at least one optical device 282 and 284 by diffracting to the user. The at least one waveguide 233 and 234 may be formed based on at least one of glass, plastic, or polymer. A nano pattern may be formed on at least a portion of the outside or inside of the at least one waveguide 233 and 234. The nano pattern may be formed based on a grating structure having a polygonal or curved shape. Light incident to an end of the at least one waveguide 233 and 234 may be propagated to another end of the at least one waveguide 233 and 234 by the nano pattern. The at least one waveguide 233 and 234 may include at least one of at least one diffraction element (e.g., a diffractive optical element (DOE), a holographic optical element (HOE)), and a reflection element (e.g., a reflection mirror). For example, the at least one waveguide 233 and 234 may be disposed in the wearable device 103 to guide a screen displayed by the at least one display 250 to the user's eyes. For example, the screen may be transmitted to the user's eyes through total internal reflection (TIR) generated in the at least one waveguide 233 and 234.

The wearable device 103 may analyze an object included in a real image collected through a photographing camera 260-4, combine with a virtual object corresponding to an object that become a subject of augmented reality provision among the analyzed object, and display on the at least one display 250. The virtual object may include at least one of text and images for various information associated with the object included in the real image. The wearable device 103 may analyze the object based on a multi-camera such as a stereo camera. For the object analysis, the wearable device 103 may execute space recognition (e.g., simultaneous localization and mapping (SLAM) using various time-of-flight (ToF) methods in which multi-camera (e.g., a plurality of red-green-blue (RGB) cameras) and/or depth cameras operate. The user wearing the wearable device 103 may watch an image displayed on the at least one display 250.

According to an embodiment, a frame 200 may be configured with a physical structure in which the wearable device 103 may be worn on the user's body. According to an embodiment, the frame 200 may be configured so that when the user wears the wearable device 103, the first display 250-1 and the second display 250-2 may be positioned corresponding to the user's left and right eyes. The frame 200 may support the at least one display 250. For example, the frame 200 may support the first display 250-1 and the second display 250-2 to be positioned at positions corresponding to the user's left and right eyes.

Referring to FIG. 2A, according to an embodiment, the frame 200 may include an area 220 at least partially in contact with the portion of the user's body in case that the user wears the wearable device 103. For example, the area 220 of the frame 200 in contact with the portion of the user's body may include an area in contact with a portion of the user's nose, a portion of the user's ear, and a portion of the side of the user's face that the wearable device 103 contacts. According to an embodiment, the frame 200 may include a nose pad 210 that is contacted on the portion of the user's body. When the wearable device 103 is worn by the user, the nose pad 210 may be contacted on the portion of the user's nose. The frame 200 may include a first temple 204 and a second temple 205 that is contacted on another portion of the user's body that is distinct from the portion of the user's body.

For example, the frame 200 may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 103 may identify an external object (e.g., a user's fingertip) touching the frame 200 and/or a gesture performed by the external object by using a touch sensor, a grip sensor, and/or a proximity sensor formed on at least a portion of the surface of the frame 200.

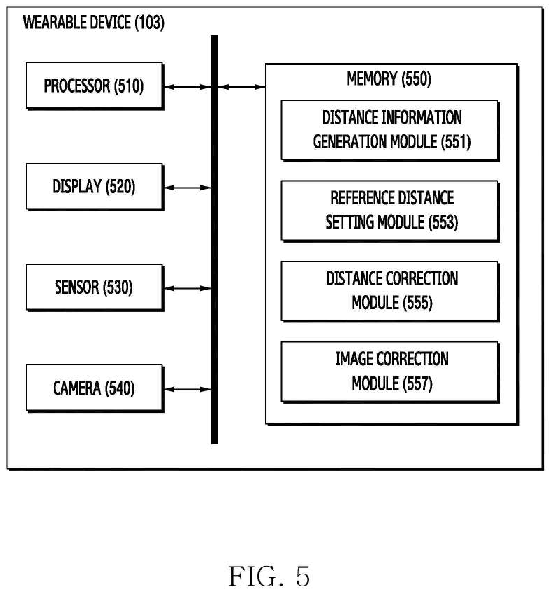

According to an embodiment, the wearable device 103 may include hardware (e.g., hardware described later based on a block diagram of FIG. 5) that performs various functions. For example, the hardware may include a battery module 270, an antenna module 275, the at least one optical device 282 and 284, speakers (e.g., speakers 255-1 and 255-2), a microphone (e.g., microphones 265-1, 265-2, and 265-3), a light emitting module (not illustrated), and/or a printed circuit board (PCB) 290. Various hardware may be disposed in the frame 200.

According to an embodiment, the microphone (e.g., the microphones 265-1, 265-2, and 265-3) of the wearable device 103 may obtain a sound signal, by being disposed on at least a portion of the frame 200. The first microphone 265-1 disposed on the bridge 203, the second microphone 265-2 disposed on the second rim 202, and the third microphone 265-3 disposed on the first rim 201 are illustrated in FIG. 2B, but the number and disposition of the microphone 265 are not limited to an embodiment of FIG. 2B. In case that the number of the microphone 265 included in the wearable device 103 is two or more, the wearable device 103 may identify the direction of the sound signal by using a plurality of microphones disposed on different portions of the frame 200.

According to an embodiment, the at least one optical device 282 and 284 may project a virtual object on the at least one display 250 in order to provide various image information to the user. For example, the at least one optical device 282 and 284 may be a projector. The at least one optical device 282 and 284 may be disposed adjacent to the at least one display 250 or may be included in the at least one display 250 as a portion of the at least one display 250. According to an embodiment, the wearable device 103 may include a first optical device 282 corresponding to the first display 250-1, and a second optical device 284 corresponding to the second display 250-2. For example, the at least one optical device 282 and 284 may include the first optical device 282 disposed at a periphery of the first display 250-1 and the second optical device 284 disposed at a periphery of the second display 250-2. The first optical device 282 may transmit light to the first waveguide 233 disposed on the first display 250-1, and the second optical device 284 may transmit light to the second waveguide 234 disposed on the second display 250-2.

In an embodiment, a camera 260 may include the photographing camera 260-4, an eye tracking camera (ET CAM) 260-1, and/or the motion recognition camera 260-2 and camera 260-3. The photographing camera 260-4, the eye tracking camera 260-1, and the motion recognition camera 260-2 and camera 260-2 may be disposed at different positions on the frame 200 and may perform different functions. The eye tracking camera 260-1 may output data indicating a position of eye or the gaze of the user wearing the wearable device 103. For example, the wearable device 103 may detect the gaze from an image including the user's pupil obtained through the eye tracking camera 260-1. The wearable device 103 may perform gaze interaction with at least one object by using the user's gaze obtained through the eye tracking camera 260-1. The wearable device 103 may represent a portion corresponding to eye of an avatar indicating the user in the virtual space, by using the user's gaze obtained through the eye tracking camera 260-1. The wearable device 103 may render an image (or a screen) displayed on the at least one display 250, based on the position of the user's eye. For example, visual quality (e.g., resolution, brightness, saturation, grayscale, and PPI) of a first area related to the gaze within the image and visual quality of a second area distinguished from the first area may be different. For example, when the wearable device 103 supports an iris recognition function, user authentication may be performed based on iris information obtained using the eye tracking camera 260-1. An example in which the eye tracking camera 260-1 is disposed toward the user's right eye is illustrated in FIG. 2B, but the embodiment is not limited thereto, and the eye tracking camera 260-1 may be disposed alone toward the user's left eye or may be disposed toward two eyes.

In an embodiment, the photographing camera 260-4 may photograph a real image or background to be matched with a virtual image in order to implement the augmented reality or mixed reality content. The photographing camera 260-4 may photograph an image of a specific object existing at a position viewed by the user and may provide the image to the at least one display 250. The at least one display 250 may display one image in which a virtual image provided through the at least one optical device 282 and 284 is overlapped with information on the real image or background including an image of the specific object obtained by using the photographing camera 260-4. The wearable device 103 may compensate for depth information (e.g., a distance between the wearable device 103 and an external object obtained through a depth sensor), by using an image obtained through the photographing camera 260-4. The wearable device 103 may perform object recognition through an image obtained using the photographing camera 260-4. While displaying a screen representing a virtual space on the at least one display 250, the wearable device 103 may perform a pass-through function for displaying an image obtained through the photographing camera 260-4 overlapping at least a portion of the screen. In an embodiment, the photographing camera 260-4 may be disposed on the bridge 203 disposed between the first rim 201 and the second rim 202.

The eye tracking camera 260-1 may implement a more realistic augmented reality by matching the user's gaze with the visual information provided on the at least one display 250, by tracking the gaze of the user wearing the wearable device 103. For example, when the user looks at the front, the wearable device 103 may naturally display environment information associated with the user's front on the at least one display 250 at a position where the user is positioned. The eye tracking camera 260-1 may be configured to capture an image of the user's pupil in order to determine the user's gaze. For example, the eye tracking camera 260-1 may receive gaze detection light reflected from the user's pupil and may track the user's gaze based on the position and movement of the received gaze detection light. In an embodiment, the eye tracking camera 260-1 may be disposed at a position corresponding to the user's left and right eyes. For example, the eye tracking camera 260-1 may be disposed in the first rim 201 and/or the second rim 202 to face the direction in which the user wearing the wearable device 103 is positioned.

The motion recognition camera 260-2 and camera 260-3 may provide a specific event to the screen provided on the at least one display 250 by recognizing the movement of the whole or portion of the user's body, such as the user's torso, hand, or face. The motion recognition camera 260-2 and camera 260-3 may obtain a signal corresponding to motion by recognizing the user's motion (e.g., gesture recognition), and may provide a display corresponding to the signal to the at least one display 250. The wearable device 103 may identify a signal corresponding to the operation and may perform a preset function based on the identification. The motion recognition camera 260-2 and 260-3 may be used to perform simultaneous localization and mapping (SLAM) for 6 degrees of freedom pose (6 dof pose) and/or a space recognition function using a depth map. The wearable device 103 may perform a gesture recognition function and/or an object tracking function, by using the motion recognition cameras 260-2 and 260-3. In an embodiment, the motion recognition camera 260-2 and camera 260-3 may be disposed on the first rim 201 and/or the second rim 202.

The camera 260 included in the wearable device 103 is not limited to the above-described eye tracking camera 260-1 and the motion recognition cameras 260-2 and 260-3. For example, the wearable device 103 may identify an external object included in the FoV by using a camera disposed toward the user's FoV. That the wearable device 103 identifies the external object may be performed based on a sensor for identifying a distance between the wearable device 103 and the external object, such as a depth sensor and/or a time of flight (ToF) sensor. The camera 260 disposed toward the FoV may support an autofocus function and/or an optical image stabilization (OIS) function. For example, in order to obtain an image including a face of the user wearing the wearable device 103, the wearable device 103 may include the camera 260 (e.g., a face tracking (FT) camera) disposed toward the face.

Although not illustrated, the wearable device 103 according to an embodiment may further include a light source (e.g., LED) that emits light toward a subject (e.g., user's eyes, face, and/or an external object in the FoV) photographed by using the camera 260. The light source may include an LED having an infrared wavelength. The light source may be disposed on at least one of the frame 200, and the hinge units 206 and 207.

According to an embodiment, the battery module 270 may supply power to electronic components of the wearable device 103. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

The antenna module 275 may transmit the signal or power to the outside of the wearable device 103 or may receive the signal or power from the outside. In an embodiment, the antenna module 275 may be disposed in the first temple 204 and/or the second temple 205. For example, the antenna module 275 may be disposed close to one surface of the first temple 204 and/or the second temple 205.

A speaker 255 may output a sound signal to the outside of the wearable device 103. A sound output module may be referred to as a speaker. In an embodiment, the speaker 255 may be disposed in the first temple 204 and/or the second temple 205 in order to be disposed adjacent to the ear of the user wearing the wearable device 103. For example, the speaker 255 may include a second speaker 255-2 disposed adjacent to the user's left ear by being disposed in the first temple 204, and a first speaker 255-1 disposed adjacent to the user's right ear by being disposed in the second temple 205.

The light emitting module (not illustrated) may include at least one light emitting element. The light emitting module may emit light of a color corresponding to a specific state or may emit light through an operation corresponding to the specific state in order to visually provide information on a specific state of the wearable device 103 to the user. For example, when the wearable device 103 requires charging, it may emit red light at a constant cycle. In an embodiment, the light emitting module may be disposed on the first rim 201 and/or the second rim 202.

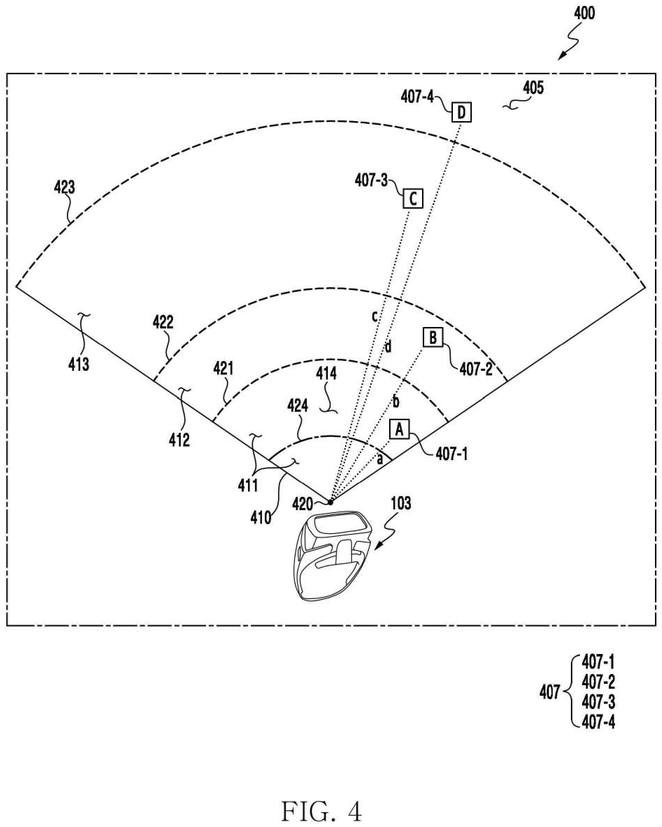

Referring to FIG. 2B, according to an embodiment, the wearable device 103 may include the printed circuit board (PCB) 290. The PCB 290 may be included in at least one of the first temple 204 or the second temple 205. The PCB 290 may include an interposer disposed between at least two sub PCBs. On the PCB 290, one or more hardware (e.g., hardware illustrated by the blocks described later with reference to FIG. 4) included in the wearable device 103 may be disposed. The wearable device 103 may include a flexible PCB (FPCB) for interconnecting the hardware.

According to an embodiment, the wearable device 103 may include at least one of a gyro sensor, a gravity sensor, and/or an acceleration sensor for detecting the posture of the wearable device 103 and/or the posture of a body part (e.g., a head) of the user wearing the wearable device 103. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 103 may identify the user's motion and/or gesture performed to execute or stop a specific function of the wearable device 103 based on the IMU.

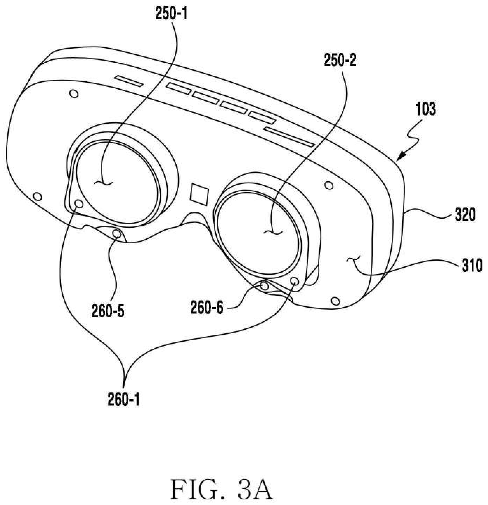

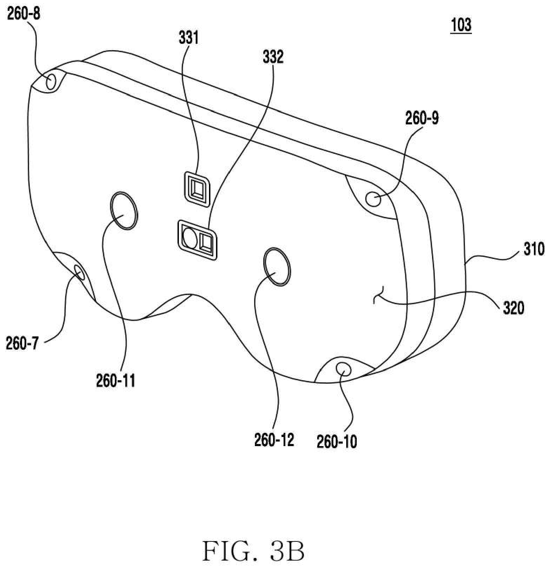

FIGS. 3A and 3B illustrate an example of appearance of a wearable device according to various embodiments.

A wearable device 103 of FIGS. 3A to 3B may be an example of the electronic device 101 of FIG. 1. According to an embodiment, an example of the exterior of a first surface 310 of a housing of the wearable device 103 may be illustrated in FIG. 3A, and an example of the exterior of a second surface 320 opposite to the first surface 310 may be illustrated in FIG. 3B.

Referring to FIG. 3A, according to an embodiment, the first surface 310 of the wearable device 103 may have an attachable shape on the user's body part (e.g., the user's face). Although not illustrated, the wearable device 103 may further include a strap for being fixed on the user's body part, and/or one or more temples (e.g., the first temple 204 and/or the second temple 205 of FIGS. 2A to 2B). A first display 250-1 for outputting an image to the left eye among the user's two eyes and a second display 250-2 for outputting an image to the right eye among the user's two eyes may be disposed on the first surface 310. The wearable device 103 may further include rubber or silicon packing, which are formed on the first surface 310, for preventing interference by light (e.g., ambient light) different from the light emitted from the first display 250-1 and the second display 250-2.

According to an embodiment, the wearable device 103 may include cameras 260-1 for photographing and/or tracking two eyes of the user adjacent to each of the first display 250-1 and the second display 250-2. The cameras 260-1 may be referred to as the gaze tracking camera 260-1 of FIG. 2B. According to an embodiment, the wearable device 103 may include cameras 260-5 and 260-6 for photographing and/or recognizing the user's face. The cameras 260-5 and 260-6 may be referred to as a FT camera. The wearable device 103 may control an avatar representing a user in a virtual space, based on a motion of the user's face identified using the cameras 260-5 and 260-6.

Referring to FIG. 3B, a camera (e.g., cameras 260-7, 260-8, 260-9, 260-10, 260-11, and 260-12), and/or a sensor (e.g., the depth sensor 331 and 332) for obtaining information associated with the external environment of the wearable device 103 may be disposed on the second surface 320 opposite to the first surface 310 of FIG. 3A. For example, the cameras 260-7, 260-8, 260-9, and 260-10 may be disposed on the second surface 320 in order to recognize an external object. The cameras 260-7, 260-8, 260-9, and 260-10 may be referred to the motion recognition cameras 260-2 and 260-3 of FIG. 2B.

For example, by using cameras 260-11 and 260-12, the wearable device 103 may obtain an image and/or video to be transmitted to each of the user's two eyes. The camera 260-11 may be disposed on the second surface 320 of the wearable device 103 to obtain an image to be displayed through the second display 250-2 corresponding to the right eye among the two eyes. The camera 260-12 may be disposed on the second surface 320 of the wearable device 103 to obtain an image to be displayed through the first display 250-1 corresponding to the left eye among the two eyes. The cameras 260-11 and 260-12 may be referred to the photographing camera 260-4 of FIG. 2B.

The wearable device 103 according to an embodiment may include the depth sensors 331 and 332 disposed on the second surface 320 to identify a distance between the wearable device 103 and an external object. For example, the depth sensors 331 and 332 may include an indirect-ToF (I-ToF) sensor 331 and a direct-ToF (D-ToF) sensor 332. Using the depth sensors 331 and 332, the wearable device 103 may obtain spatial information (e.g., a depth map) for at least a portion of the FoV of the user wearing the wearable device 103. Although not illustrated, a microphone for obtaining a sound outputted from an external object may be disposed on the second surface 320 of the wearable device 103. The number of microphones may be one or more, according to an embodiment.

The components of the wearable device 103 illustrated in FIGS. 2A to 3B are merely exemplary and the present disclosure is not limited thereto. For example, the wearable device 103 may further include at least one of the components illustrated in FIGS. 2A to 3B or may not include at least one of the components. For example, the wearable device 103 may include the components in a region (or disposition) different from a region (or disposition) in which the components illustrated in FIGS. 2A to 3B are positioned. For example, the wearable device 103 may include a different number of components from the number of each of the components (e.g., a camera or a sensor) illustrated in FIGS. 2A to 3B.

The wearable device 103 may detect (or measure, sense, identify, or obtain) a distance to an external object in an external environment by using the components of the wearable device 103. For example, the external environment may represent an actual environment (or real environment) representing the surroundings of the user wearing the wearable device 103. For example, the external object may represent an object positioned in the external environment. For example, the components may include a camera or a sensor.

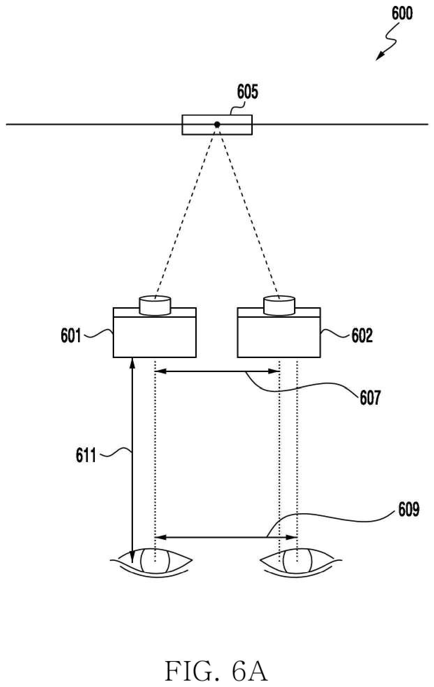

For example, the camera may include the photographing camera 260-4 of FIGS. 2A and 2B or the cameras 260-11 and 260-12 of FIGS. 3A and 3B. For example, the camera may include at least one RGB camera. The wearable device 103 may detect a distance to the external object by using an image (or images) photographed (or obtained) using the camera. For example, the distance may represent a straight-line distance from a reference position where a lens of the camera is positioned in the wearable device 103 to the external object. In the above example, the reference position is described as corresponding to a position of the lens of the camera in the wearable device 103, but the present disclosure is not limited thereto. For example, the reference position may correspond to a position of a sensor portion (or plane, image plane) inside the camera. A specific example for a method of detecting the distance by the wearable device 103 using the camera will be described in FIG. 6A below.

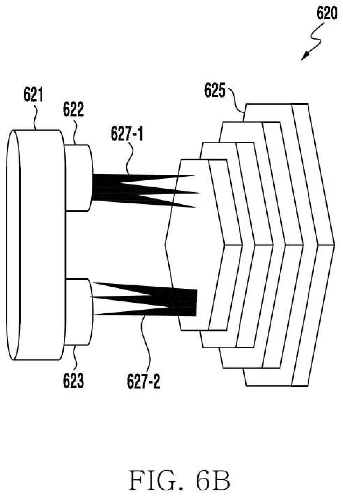

For example, the sensor may include the ToF sensor of FIGS. 2A and 2B or the depth sensors 331 and 332 of FIGS. 3A and 3B. For example, the sensor may include at least one of the indirect-ToF (I-ToF) sensor or the direct-ToF (D-ToF) sensor. The wearable device 103 may detect the distance by using at least one of the I-ToF sensor or the D-ToF sensor. A specific example for a method of detecting the distance by the wearable device 103 using the sensor will be described in FIGS. 6B and 6B below.

The wearable device 103 may include at least one of the D-ToF sensor and the I-ToF sensor. For example, the wearable device 103 may detect the distance by using distance information obtained using one of the D-ToF sensor and the I-ToF sensor. However, as described below, since each of the D-ToF sensor and the I-ToF sensor has different ranges (or regions) that may accurately detect a distance, the distance to the external object detected by the wearable device 103 may not be accurate. In addition, compared to the I-ToF sensor, the D-ToF sensor takes more time to obtain and process distance information, and the resolution of the sensor may be low.

While wearing the wearable device 103, the user may experience a sense of heterogeneity caused by a difference between a user's field of view (or FoV) and a FoV (or zoom magnification) of the camera of the wearable device 103. For example, the sense of heterogeneity may be caused by a difference between a depth at which an external object is perceived through the user's eyes and a distance at which the external object is contacted by the user's body portion (e.g., hand). In the above example, the sense of heterogeneity according to the difference between the user's field of view and the FoV of the camera is described, but the present disclosure is not limited thereto. For example, the sense of heterogeneity may also be caused by a difference between the position of the user's eye and the position of the camera (or the position of the lens (or the plane of the lens, image plane)), which is formed by a thickness of the wearable device 103. Alternatively, the sense of heterogeneity may also be caused by a difference between a distance between the user's eyes (interpupillary distance (IPD)) and a distance between the cameras of the wearable device 103.

In order to resolve the sense of heterogeneity, the wearable device 103 may correct an image indicating the external environment by using the distance information obtained through the D-ToF sensor or the I-ToF sensor. At this time, a depth of a visual object corresponding to the external object of the image may be corrected based on the distance information. For example, the depth of the visual object may represent a positional relationship (e.g., information representing whether the visual object is located relatively in front or behind) between other visual objects within the image. In other words, the wearable device 103 may correct (or map) the image obtained through the camera based on the distance information. For example, operation of correcting based on the distance information may be referred to as reprojection.

For example, the reprojection may be performed for each external object in consideration of the distance information obtained by the wearable device 103 and a separation distance between the wearable device 103 and the user's eyes. For example, an error rate of distance information for an external object positioned relatively far from the wearable device 103 (or the user) within the external environment may be different from an error rate of distance information for an external object positioned relatively close to the wearable device 103 (or the user). Therefore, the wearable device 103 needs to correct differently for each external object in identifying the depth of the visual object corresponding to the external object.

In addition, the resolution of the image obtained through the camera of the wearable device 103 may be higher than the resolution of distance information (or depth image) for the external object obtained through the sensor of the wearable device 103. Therefore, the wearable device 103 needs to process the distance information obtained through the sensor by up-sampling at a high magnification to correspond to the high resolution of the image obtained through the camera.

Hereinafter, the device, method, and storage medium according to the present disclosure may use data obtained by using a plurality of sensors (e.g., the I-ToF sensor and the D-ToF sensor) and at least one camera (e.g., at least one RGB camera) included in the wearable device 103. For example, the device, method, and storage medium according to the present disclosure may select data to be used for correcting the distance to the external object according to the region (or the distance to the external object) in which the external object is positioned within the external environment. The device, method, and storage medium according to the present disclosure may identify the distance (or the depth of the visual object corresponding to the external object) to the external object by using at least one of the images obtained through the at least one camera or distance information obtained through the plurality of sensors. The device, method, and storage medium according to the present disclosure may reduce power consumption according to driving of the plurality of sensors by determining at least one sensor among the plurality of sensors to be used by using the distance to the external object. The device, method, and storage medium according to the present disclosure may perform correction (or reprojection) for an image to be displayed by using a more accurately identified (or corrected) distance. Accordingly, the device, method, and storage medium according to the present disclosure may improve (e.g., reduce the sense of heterogeneity) the user experience by identifying an accurate distance (or depth).

Hereinafter, the present disclosure is described based on the wearable device 103 that provides a visual see-through (VST) for convenience of description, but the present disclosure is not limited thereto. For example, the present disclosure may also be applied to the wearable device 103 that provides an AR environment.

FIG. 4 illustrates an example for a method of measuring a distance to an external object according to a position of the external object.

FIG. 4 illustrates an example 400 for a method of measuring a distance to external objects 407 according to the position of the external objects 407. A wearable device 103 of FIG. 4 may represent an example of an electronic device 101 of FIG. 1 and a wearable device 103 of FIGS. 2A to 3B.

Referring to the example 400, the wearable device 103 may obtain an image of an external environment 405. For example, the wearable device 103 may obtain the image (or images) of the external environment 405 by using at least one camera of the wearable device 103. For example, the image may include a region 410 of the external environment 405 corresponding to a FoV of the at least one camera. For example, the region 410 may be determined based on the FoV and a reference position 420. For example, the reference position 420 may be determined based on a portion where at least one lens of the at least one camera is positioned in the wearable device 103. For example, in case that the at least one camera includes a plurality of cameras, the reference position 420 may be positioned between a plurality of lenses of the plurality of cameras.

For example, the wearable device 103 may identify (or obtain) the distance of each of the external objects 407 through the image (or images). For example, the distance may represent the distance from the reference position 420 to each of the external objects 407. For example, the wearable device 103 may identify a distance a to a first external object 407-1, a distance b to a second external object 407-2, a distance c to a third external object 407-3, and a distance d to a fourth external object 407-4 by using a distance measurement technique for the image.

For example, the wearable device 103 may determine a partial region of the external environment 405 in which the identified distance is positioned. For example, the partial region may be included in the region 410. For example, the region 410 may include a first partial region 411, a second partial region 412, and a third partial region 413. For example, the first partial region 411 may represent a region between the reference position 420 and a first reference distance 421. For example, the first partial region 411 may be referred to as a near-distance region. For example, the second partial region 412 may represent a region between the first reference distance 421 and a second reference distance 422. For example, the second partial region 412 may be referred to as an intermediate distance region. For example, the third partial region 413 may represent a region between the second reference distance 422 and a third reference distance 423. For example, the third partial region 413 may be referred to as a long-distance region. For example, the partial region may be defined by a range in which the distance to an external object is between a first reference value (e.g., the reference position 420, the first reference distance 421, and the second reference distance 422) and a second reference value (e.g., the first reference distance 421, the second reference distance 422, and the third reference distance 423). For example, in case that the first reference value is the reference position 420, the second reference value may be the first reference distance 421. For example, in case that the first reference value is the first reference distance 421, the second reference value may be the second reference distance 422. For example, in case that the first reference value is the second reference distance 422, the second reference value may be the third reference distance 423.

According to an embodiment, the first reference distance 421 may be determined based on a measurable distance by a first distance sensor (e.g., an I-ToF sensor) of the wearable device 103. For example, the I-ToF sensor may be referred to as a first sensor. For example, the measurable distance of the first distance sensor may be about 10 cm to about 1 m. The example of the measurable distance is merely an example for convenience of description, and the present disclosure is not limited thereto. For example, the first reference distance 421 may be set to a measurable maximum distance (e.g., about 1 m) of the first distance sensor.

According to an embodiment, the second reference distance 422 may be determined based on a measurable distance by at least one sensor (e.g., at least one camera (e.g., RGB camera)) of the wearable device 103. For example, the measurable distance of the at least one camera may be about 50 cm to about 1.5 m. The example of the measurable distance is merely an example for convenience of description, and the present disclosure is not limited thereto. For example, the second reference distance 422 may be set to a measurable maximum distance (e.g., about 1.5 m) of the at least one camera.

According to an embodiment, the third reference distance 423 may be determined based on a measurable distance by a second distance sensor (e.g., a D-ToF sensor) of the wearable device 103. For example, the D-ToF sensor may be referred to as a second sensor. For example, the measurable distance of the second distance sensor may be about 20 cm to about 5 m. The example of the measurable distance is merely an example for convenience of description, and the present disclosure is not limited thereto. For example, the third reference distance 423 may be set to a measurable maximum distance (e.g., about 5 m) of the second distance sensor.

For example, the measurable distance may represent a measurement range having accuracy greater than or equal to reference accuracy of the at least one camera, the first distance sensor, and the second distance sensor. In other words, the wearable device 103 is not incapable of measuring a distance to an external object positioned at a distance outside the measurable distance by using the at least one camera, the first distance sensor, and the second distance sensor. The accuracy (or reliability) of the measured distance to the external object positioned at a distance outside the measurable distance may be less than the reference accuracy. For example, the measurable distance with accuracy greater than or equal to the reference accuracy may include a distance in which a difference between an estimated distance to the external object and an actual distance to the external object is less than a reference difference.

In the above example, an example of using the first distance sensor (e.g., the I-ToF sensor), the at least one camera, and the second distance sensor (e.g., the D-ToF sensor) is described, but the present disclosure is not limited thereto. For example, the at least one camera may be replaced with an image sensor. In addition, the measurable distance may differ according to the sensor used. For example, the measurable distance of the first distance sensor may be different from the measurable distance of the second distance sensor. In addition, the accuracy of determining the measurable distance may differ according to the sensor. The present disclosure describes an example in which three components (or sensors) (e.g., the first distance sensor, the at least one camera, and the second distance sensor) are used, but the present disclosure is not limited thereto. For example, the present disclosure may also be applied to the wearable device 103 including four components (or sensors). According to an embodiment, the wearable device 103 may use three or more components to perform operations according to the present disclosure, and may use a variable number of components while performing the operations.

Referring to the described above, the first partial region 411 may represent a region of the external environment 405 between the reference position 420 (e.g., 0) and the first reference distance 421 (e.g., about 1 m). The second partial region 412 may represent a region of the external environment 405 between the first reference distance 421 (e.g., about 1 m) and the second reference distance 422 (e.g., about 1.5 m). The third partial region 413 may represent a region of the external environment 405 between the second reference distance 422 (e.g., about 1.5 m) and the third reference distance 423 (e.g., about 5 m).

In the above example, the region 410 is illustrated as including the first partial region 411, the second partial region 412, and the third partial region 413, but the embodiment of the present disclosure is not limited thereto. For example, the region 410 may include a region (or remaining region) (e.g., a region representing a distance of about 5 m or more) positioned at a distance greater than the third partial region 413. Alternatively, for example, the region 410 may include a region (or a region of interest) where a gaze (or direction of the gaze) of a user of the wearable device 103 is positioned. For example, the region of interest may represent a region defined across at least one partial region. Alternatively, for example, the region 410 may further include a fourth partial region 414 included in the first partial region 411. For example, the fourth partial region 414 may represent a region (e.g., about 50 cm to about 1 m) extending from a portion 424 of the first partial region 411 toward the second partial region 412 to the first reference distance 421. For example, the fourth partial region 414 may be determined based on a measurable minimum distance (e.g., about 50 cm) of the at least one camera and the measurable maximum distance (e.g., about 1 m) (or the first reference distance 421) of the first distance sensor.

For example, the wearable device 103 may determine that the first external object 407-1 is positioned in the first partial region 411 according to the distance a identified through the image. The wearable device 103 may determine that the second external object 407-2 is positioned in the second partial region 412 according to the distance b identified through the image. The wearable device 103 may determine that the third external object 407-3 is positioned in the third partial region 413 according to the distance c identified through the image. The wearable device 103 may determine that the fourth external object 407-4 is positioned in the remaining region of the region 410 according to the distance d identified through the image.

For example, the wearable device 103 may identify a corrected distance from the distance to the external object by using at least one sensor among the first distance sensor or the second distance sensor, according to the distance to the external object (or the region in which the external object is positioned in the external environment 405). For example, the corrected distance may be referred to as a final distance. For example, in case that a distance (e.g., the distance a) to an external object (e.g., the first external object 407-1) is less than the first reference distance 421, the wearable device 103 may identify a corrected distance a' from the reference position 420 to the external object based on first distance information obtained from the first distance sensor and the distance (or the distance identified through the image obtained from the at least one camera) to the external object. For example, in case that a distance (e.g., the distance b) to an external object (e.g., the second external object 407-2) is greater than or equal to the first reference distance 421 and is less than the second reference distance 422, the wearable device 103 may identify a corrected distance b' from the reference position 420 to the external object based on the first distance information obtained from the first distance sensor, second distance information obtained from the second distance sensor, and the distance to the external object. For example, in case that a distance (e.g., the distance c) to an external object (e.g., the third external object 407-3) is greater than or equal to the second reference distance 422 and is less than the third reference distance 423, the wearable device 103 may identify a corrected distance c' from the reference position 420 to the external object based on the second distance information obtained from the second distance sensor and the distance to the external object.

According to an embodiment, the wearable device 103 may correct (or reproject) the image obtained through the at least one camera based on the corrected distance. For example, the wearable device 103 may generate a corrected image such that a visual object corresponding to an external object appears (or is perceived) as being positioned at a depth according to the corrected distance. For example, the wearable device 103 may display the corrected image through at least one display of the wearable device 103.

According to an embodiment, in case that a distance (e.g., the distance d) to an external object (e.g., the fourth external object 407-4) is greater than or equal to the third reference distance 423, the wearable device 103 may generate an image such that the visual object corresponding to the external object appears (or is perceived) as being positioned at the distance. For example, the wearable device 103 may display the generated image through at least one display of the wearable device 103. In other words, the wearable device 103 may refrain from (or skip, delay, or exclude) performing correction of the image for an external object positioned in the remaining region.

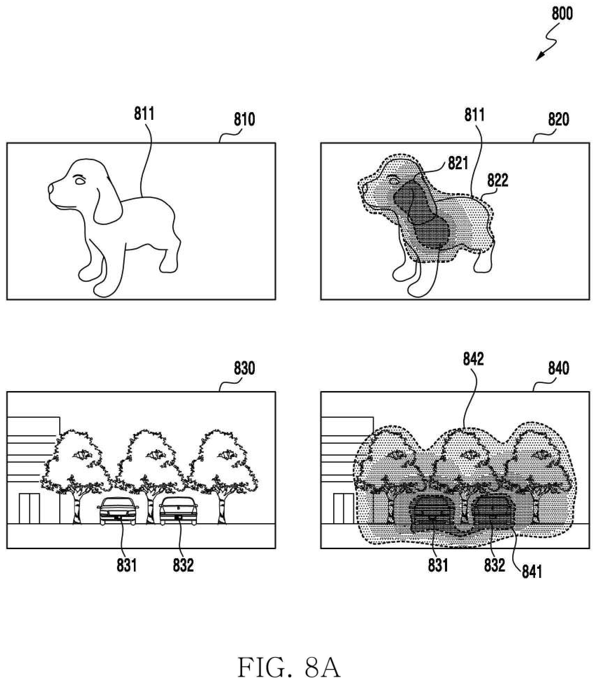

Although not illustrated in the example 400 of FIG. 4, according to an embodiment, the wearable device 103 may identify the corrected distance further based on a saliency map. For example, the wearable device 103 may calculate a weight to be applied to the distance obtained using the image, the first distance information of the first distance sensor, and the second distance information of the second distance sensor based on the saliency map including information on the user's region of interest. For example, the weight may be referred to as a weight value, a compensation value, and a compensation ratio. For example, the region of interest may be referred to as a weight region. For example, the wearable device 103 may adjust an operating ratio between the at least one camera and sensors by applying the calculated weight to the distance, the first distance information, and the second distance information. In addition, for example, the wearable device 103 may identify the region of interest by further using a region (or gaze range) to which the user's gaze is directed, along with the saliency map. A specific detail related to this is described in FIGS. 8A to 8C below.

According to an embodiment, the wearable device 103 may identify the corrected distance based on scene analysis for the image obtained through the at least one camera. For example, the scene analysis may include analysis based on SLAM. For example, the wearable device 103 may identify the position of each of one or more external objects in the image based on the scene analysis. For example, the wearable device 103 may store information on the position of each of the one or more external objects as scene understanding data. For example, the scene understanding data may be used in a software application executed by the wearable device 103. For example, the scene understanding data may be used for a service provided by the software application. In case that the scene understanding data is stored in a number greater than or equal to reference data number, the wearable device 103 may recognize that one or more objects of interest are positioned in a specific partial region among the partial regions. For example, the wearable device 103 may store information on the position identified from each of the images as the scene understanding data. In case that the number of the scene understanding data is stored greater than the number of the reference data, the wearable device 103 may recognize that one or more objects of interest are positioned in a specific partial region among the partial regions. For example, the wearable device 103 may identify the specific partial region in which the one or more objects of interest are positioned as the region of interest (or weight region). For example, the object of interest may include an external object that the user is interested in. Accordingly, the wearable device 103 may calculate a weight to be applied to the distance obtained through the image, the first distance information of the first distance sensor, and the second distance information of the second distance sensor. For example, the wearable device 103 may adjust the operating ratio between the sensors by applying the calculated weight to the distance, the first distance information, and the second distance information.

According to an embodiment, the wearable device 103 may identify the corrected distance based on a user's gesture. For example, the wearable device 103 may identify a gesture or interaction by a user's hand through a sensor or a camera. In case of identifying the gesture or interaction, the wearable device 103 may identify the first partial region 411 as a region of interest, and accordingly calculate a weight to be applied to the distance obtained through the image and the first distance information of the first distance sensor. However, the present disclosure is not limited thereto. For example, in case of identifying the gesture or interaction, the wearable device 103 may identify the fourth partial region 414 in the first partial region 411 as a region of interest, and calculate a weight to be applied to the distance obtained through the image, the first distance information of the first distance sensor, and the second distance information of the second distance sensor. Alternatively, for example, in case of identifying the gesture or interaction, the wearable device 103 may identify the first partial region 411 as a region of interest, and calculate a weight to be applied to the distance obtained through the image, the first distance information of the first distance sensor, and the second distance information of the second distance sensor. In this case, for higher accuracy even in the first partial region 411, the wearable device 103 may identify the corrected distance to the external object by using the second distance information together with the first distance information.

According to an embodiment, in case that illuminance of the external environment is less than reference illuminance, the wearable device 103 may identify the distance to the external object of the external environment based on the second distance information of the second distance sensor instead of the image obtained from the at least one camera. By comparing the distance to the external object identified based on the second distance information with the partial regions, the wearable device 103 may determine distance information to be used.

According to an embodiment, in case that a surface of the external object is composed of a material that reflects light, the wearable device 103 may calculate a weight to be applied to the image (or the distance obtained using the image) obtained through the at least one camera as a relatively higher value compared to distance information obtained from the first distance sensor and the second distance sensor. In addition, in case of processing a region (e.g., a periphery (or corner) portion of the external object) where the light is scattered in the external environment, the wearable device 103 may calculate a weight to be applied to the image (or the distance obtained using the image) obtained through the at least one camera as a relatively higher value compared to distance information obtained from the first distance sensor and the second distance sensor. Accordingly, the wearable device 103 may prevent malfunction of ToF sensors and/or correct for certain conditions.

FIG. 5 illustrates an exemplary block diagram of a wearable device.

A wearable device 103 of FIG. 5 may be an example of an electronic device 101 of FIG. 1, a wearable device 103 of FIGS. 2A to 3B, or a wearable device 103 of FIG. 4.

Referring to FIG. 5, an exemplary situation in which the wearable device 103 is connected to an external electronic device (not illustrated) based on a wired network and/or a wireless network is illustrated. For example, the wired network may include a network such as the Internet, a local area network (LAN), a wide area network (WAN), or a combination thereof. For example, the wireless network may include a network such as long term evolution (LTE), 5G new radio (NR), wireless fidelity (Wi-Fi), Zigbee, near field communication (NFC), Bluetooth, Bluetooth low-energy (BLE), or a combination thereof. Although the wearable device 103 and the external electronic device are illustrated as being directly connected, the wearable device 103 and the external electronic device may be indirectly connected through one or more routers and/or access point (AP).

Referring to FIG. 5, the wearable device 103 according to an embodiment may include at least one of a processor 510, a display 520, a sensor 530, a camera 540, or a memory 550. The processor 510, the display 520, the sensor 530, the camera 540, and the memory 550 may be electronically and/or operably coupled with each other by a communication bus. Hereinafter, the hardware components being operably coupled may mean that a direct connection or an indirect connection between the hardware components is established, either wired or wireless, such that a second hardware component is controlled by a first hardware component among the hardware components. Although illustrated based on different blocks, the embodiment is not limited thereto, and a portion (e.g., at least a portion of the processor 510 and the memory 550) of the hardware components illustrated in FIG. 5 may be included in a single integrated circuit such as a system on a chip (SoC). The type and/or number of the hardware components included in the wearable device 103 is not limited to those illustrated in FIG. 5. For example, the wearable device 103 may include only some of the hardware components illustrated in FIG. 5.

The processor 510 of the wearable device 103 according to an embodiment may include a hardware component for processing data based on one or more instructions. The hardware component for processing data may include, for example, an arithmetic and logic unit (ALU), a floating point unit (FPU), and a field programmable gate array (FPGA). For example, the hardware component for processing data may include a central processing unit (CPU), a graphics processing unit (GPU), a digital signal processing (DSP), and/or a neural processing unit (NPU). The number of processors 510 may be one or more. For example, the processor 510 may have a structure of a multi-core processor such as a dual core, a quad core, or a hexa core. The processor 510 of FIG. 5 may include a processor 120 of FIG. 1.

For example, the processor 510 may include various processing circuits and/or a plurality of processors. For example, the term "processor" as used herein, including the scope of the claim, may include various processing circuits including at least one processor, and one or more of the at least one processor may be configured to perform various functions described below individually and/or collectively in a distributed manner. As used below, in case that the "processor", "at least one processor", and "one or more processors" are described as being configured to perform various functions, these terms encompass, for example and without limitation, situations in which one processor performs a portion of the cited functions and another processor(s) performs other portions of the cited functions, and also situations in which one processor may perform all of the cited functions. Additionally, the at least one processor may include a combination of processors that perform various functions enumerated/initiated, for example, in a distributed manner. At least one processor may execute program instructions to achieve or perform various functions.

The display 520 of the wearable device 103 according to an embodiment may output visualized information to a user. The number of displays 520 included in the wearable device 103 may be one or more. For example, the display 520 may be referred to as a display system including one or more displays. For example, the display 520 may output visualized information to the user by being controlled by the processor 510 and/or a graphic processing unit (GPU) (not illustrated). The display 520 may include a flat panel display (FPD) and/or an electronic paper. The FPD may include a liquid crystal display (LCD), a plasma display panel (PDP), a digital mirror device (DMD), one or more light emitting diodes (LEDs), and/or a micro LED. The LED may include an organic LED (OLED). The display 520 of FIG. 5 may include a display module 160 of FIG. 1.

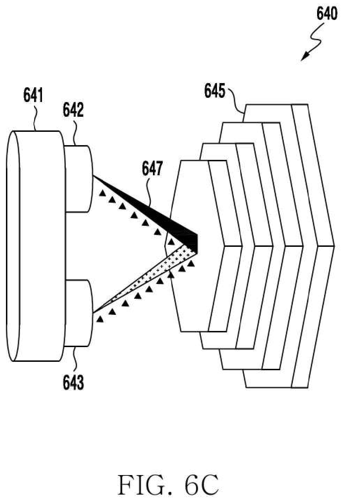

The wearable device 103 according to an embodiment may include the sensor 530. For example, the sensor 530 may include ToF sensors for measuring a distance to an external object positioned in an external environment around the wearable device 103. For example, the ToF sensors may include an indirect-ToF (I-ToF) sensor (or a first distance sensor) and a direct-ToF (D-ToF) sensor (or a second distance sensor). For example, the wearable device 103 may generate (or obtain) distance information indicating the distance by using at least one ToF sensor among the ToF sensors. For example, the distance information obtained through the I-ToF sensor may be referred to as first distance information. For example, the distance information obtained through the D-ToF sensor may be referred to as second distance information. A specific example for a method of detecting the distance by the wearable device 103 using the sensor 530 is described in FIGS. 6B and 6C below. However, the present disclosure is not limited thereto. For example, the wearable device 103 may include at least one sensor for detecting a user's gesture. For example, the sensor 530 of FIG. 5 may include at least a portion of a sensor module 176 of FIG. 1.

The wearable device 103 according to an embodiment may include the camera 540. The camera 540 may include one or more optical sensors (e.g., a charged coupled device (CCD) sensor and a complementary metal oxide semiconductor (CMOS) sensor) that generates an electrical signal indicating the color and/or brightness of light. For example, the camera 540 may be used (or replaced) as an image sensor. For example, the camera 540 may be referred to as a camera system including one or more cameras. A plurality of optical sensors included in the camera may be disposed in a form of a 2-dimensional array. The camera 540 may correspond to light reaching the optical sensors of the 2-dimensional array by substantially simultaneously obtaining the electrical signal of each of the plurality of optical sensors, and generate an image including a plurality of pixels arranged in 2 dimensions. According to an embodiment, the wearable device 103 may render an actual environment in the image from the image obtained through the camera 540, and display the rendered visual information. The number of cameras 540 included in the wearable device 103 may be one or more, as described above with reference to FIGS. 2A and 2B, and/or FIGS. 3A and 3B. For example, the camera 540 may be referred to as an RGB camera or an RGB vision camera.

The memory 550 of the wearable device 103 according to an embodiment may include a hardware component for storing data and/or instruction inputted to the processor 510 and/or outputted from the processor 510. The memory 550 may include, for example, volatile memory such as random-access memory (RAM) and/or non-volatile memory such as read-only memory (ROM). The volatile memory may include, for example, at least one of dynamic RAM (DRAM), static RAM (SRAM), Cache RAM, and pseudo SRAM (PSRAM). The non-volatile memory may include, for example, at least one of programmable ROM (PROM), erasable PROM (EPROM), electrically erasable PROM (EEPROM), flash memory, hard disk, compact disk, and embedded multimedia card (eMMC). The memory 550 of FIG. 5 may include a memory 130 of FIG. 1.

Although not illustrated in FIG. 5, the wearable device 103 may include a communication circuit. For example, the communication circuit may include hardware for supporting transmission and/or reception of an electrical signal between the wearable device 103 and the external electronic device. The communication circuit may include, for example, at least one of a MODEM, an antenna, and an optic/electronic (O/E) converter. The communication circuit may support the transmission and/or reception of the electrical signal based on various types of communication means such as Ethernet, Bluetooth, Bluetooth low energy (BLE), ZigBee, long term evolution (LTE), and 5G new radio (NR). The communication circuit may include a communication module 190 and/or an antenna module 197 of FIG. 1.

Although not illustrated in FIG. 5, the wearable device 103 according to an embodiment may include an output means for outputting information in a form other than a visualized form. For example, the wearable device 103 may include a speaker for outputting an acoustic signal. For example, the wearable device 103 may include a motor for providing haptic feedback based on vibration.

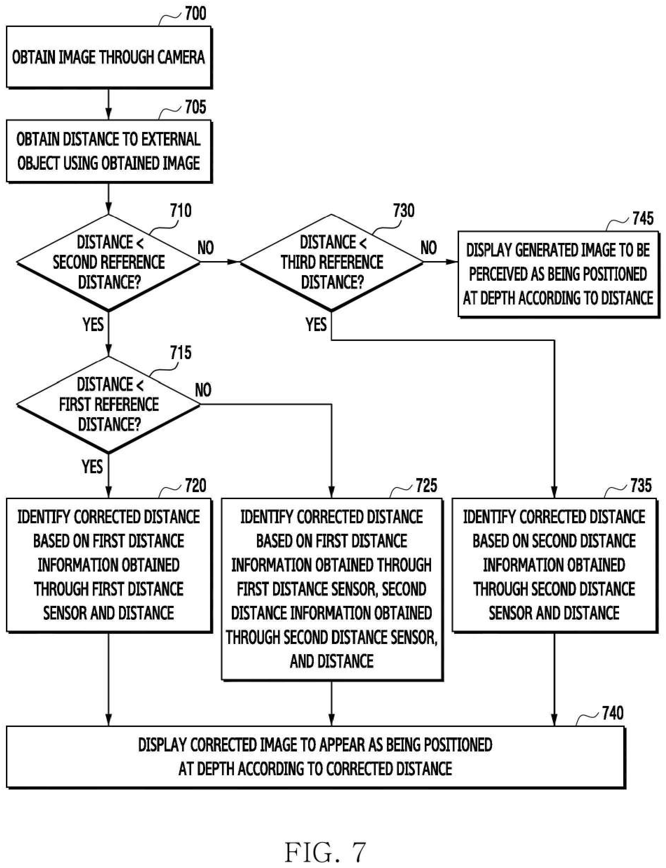

Referring to FIG. 5, in the memory 550 of the wearable device 103 according to an embodiment, one or more instructions (or commands) representing calculation and/or operation to be performed on data by the processor 510 of the wearable device 103 may be stored. A set of one or more instructions may be referred to as a program, firmware, an operating system, a process, a routine, a sub-routine, and/or an application. Hereinafter, the fact that the application is installed in an electronic device (e.g., the wearable device 103) may mean that one or more instructions provided in the form of the application are stored in the memory 550, and that the one or more applications are stored in a format (e.g., a file having an extension designated by an operating system of the wearable device 103) executable by a processor of the electronic device. The wearable device 103 according to an embodiment may perform operations of FIGS. 7, 8B, 8C, and 9 by executing one or more instructions stored in the memory 550.

For example, programs installed on the wearable device 103 may be classified into any one of different layers, including an application layer, a framework layer, and/or a hardware abstraction layer (HAL), based on a target. For example, in the hardware abstraction layer, programs (e.g., a driver) designed to target a hardware (e.g., the display 520, the sensor 530, and/or the camera 540) of the wearable device 103 may be classified. For example, in the framework layer, programs (e.g., a distance information generation module 551, a reference distance setting module 553, a distance correction module 555, and/or an image correction module 557) designed to target at least one among the hardware abstraction layer and/or an application layer may be classified. Programs classified as the framework layer may provide an executable application programming interface (API) based on another program.

For example, in the application layer, a program designed to target the user controlling the wearable device 103 may be classified. For example, the program classified as the application layer may include at least one of applications providing an XR environment. However, the embodiment of the present disclosure is not limited thereto. For example, the program classified as the application layer may cause execution of a function supported by programs classified as the framework layer by calling the API.

Referring to FIG. 5, the wearable device 103 may detect (or identify, obtain, or measure) a distance to an external object in an external environment based on execution of the distance information generation module 551. For example, the wearable device 103 may detect the distance to the external object by using an image (or images) photographed (or obtained) using the camera 540. The distance detected (or identified) using the image may be referred to as a temporary distance or an initial distance. For example, the wearable device 103 may obtain the first distance information (or depth image) representing the distance to the external object using the first distance sensor. Alternatively, for example, the wearable device 103 may obtain the second distance information (or depth image) representing the distance to the external object using the second distance sensor. For example, the depth image may include an image for visually displaying a depth of an external object.

Referring to FIG. 5, the wearable device 103 may set a reference distance based on execution of the reference distance setting module 553. For example, the wearable device 103 may set a plurality of reference distances based on the capability (or performance) of the sensor 530 and/or the camera 540. For example, the plurality of reference distances may represent a reference for distinguishing a plurality of partial regions (e.g., the first partial region 411, the second partial region 412, and the third partial region 413 of FIG. 4) included in a region (e.g., the region 410 of FIG. 4) of an external environment around the wearable device 103. For example, the plurality of reference distances may include a first reference distance (e.g., the first reference distance 421 of FIG. 4) determined based on a measurable distance of the first distance sensor, a second reference distance (e.g., the second reference distance 422 of FIG. 4) determined based on a measurable distance of the camera 540, and a third reference distance (e.g., the third reference distance 423 of FIG. 4) determined based on a measurable distance of the second distance sensor. However, the present disclosure is not limited thereto. In the above example, the wearable device 103 may change (or adjust) each of the plurality of reference distances based on at least a portion of the user's input.

Referring to FIG. 5, the wearable device 103 may correct a distance to an external object based on execution of the distance correction module 555. For example, the wearable device 103 may identify the corrected distance based on the distance identified from the image obtained through the camera 540 and at least one distance information. For example, the at least one distance information may be determined according to a comparison between the distance identified from the image and the plurality of reference distances. For example, in case that the distance is less than the first reference distance, the at least one distance information may include the first distance information. For example, in case that the distance is less than the second reference distance and is greater than or equal to the first reference distance, the at least one distance information may include the first distance information and the second distance information. For example, in case that the distance is greater than or equal to the second reference distance, the at least one distance information may include the second distance information. However, the present disclosure is not limited thereto.

According to an embodiment, the wearable device 103 may identify (or generate) the corrected distance changed (or adjusted) from the distance by using the at least one distance information. For example, the wearable device 103 may identify the corrected distance x` from the distance x by using the at least one distance information. For example, the corrected distance x` may be identified based on a formula x`=(x+α)/n to which a correction value α calculated from the at least one distance information is added at the distance x. The value n may represent the number of the distance and the at least one distance information used. For example, the correction value α may be calculated based on a formula (e.g., α=a1I+a2D). For example, the value I may represent a first value based on the first distance information, the value D may represent a second value based on the second distance information, the value a1 may represent a first weight to be applied to the first distance information, and the value a2 may represent a second weight to be applied to the second distance information. However, the formulas are only exemplary, and the present disclosure is not limited thereto. For example, the corrected distance x` may be identified based on a formula x`=(a3x+α)/n. For example, the value a3 may represent a third weight to be applied to the distance. The calculation method as described above may be referred to as a normalized method.

Alternatively, the wearable device 103 may identify (or generate) the corrected distance based on the at least one distance information determined to be used according to the distance. For example, the wearable device 103 may determine the at least one distance information to be used based on the distance, and identify the corrected distance using the determined at least one distance information. For example, in case that the distance is greater than or equal to the first reference distance and is less than the second reference distance, the wearable device 103 may determine to use the first distance information and the second distance information to identify the corrected distance. For example, the wearable device 103 may calculate the corrected distance x` by using the first value I based on the first distance information and the second value D based on the second distance information. For example, the corrected distance x` may be calculated through interpolation by the first value I and the second value D. The calculation method as described above may be referred to as an interpolation method. For example, according to the interpolation method, when calculating the corrected distance x`, a first weight to be applied to the first value and a second weight to be applied to the second value may be used. The first weight and the second weight are used as factors substantially the same as the first weight and the second weight of the normalized method, but may have different values from the first weight and the second weight of the normalized method.

Referring to FIG. 5, the wearable device 103 may correct an image to be displayed based on execution of the image correction module 557. For example, the wearable device 103 may generate a corrected image from the image obtained through the camera 540. For example, the corrected image may be changed (or adjusted) such that a visual object corresponding to an external object appears (or is perceived) as being positioned at a depth according to the corrected distance. As described above, the wearable device 103 may perform correction (or reprojection) for each of one or more visual objects in the image. For example, the one or more visual objects may represent visual information corresponding to one or more external objects in the external environment.

FIGS. 6A to 6C illustrate examples for a method of measuring a distance to an external object.

FIG. 6A illustrates an example 600 for a method of measuring a distance to an external object 605 by using cameras 601 and 602 of a wearable device 103. The cameras 601 and 602 of FIG. 6A may be an example of a camera 540 of FIG. 5. In the example 600 of FIG. 6A, an example for a method of measuring the distance by using the two cameras 601 and 602 is illustrated, but the present disclosure is not limited thereto. For example, the wearable device 103 may measure the distance by using one camera.

Referring to the example 600, the wearable device 103 may obtain an image using each of the cameras 601 and 602 disposed at different positions, and identify the distance to the external object 605 based on the degree of parallax (or binocular parallax) of a visual object corresponding to the external object 605 in each image. For example, the shorter the distance to the external object 605 (or the closer the distance from the wearable device 103 (or the reference position) to the external object 605), the greater the parallax of the visual object between images may be. For example, the parallax may be determined according to a comparison between feature points for the visual object of each of the images. For example, it is assume that the images include a first image obtained through the camera 601 and a second image obtained through the camera 602. A difference between first feature points for the visual object in the first image and second feature points for the visual object in the second image may be identified. For example, the difference may be defined by the number of pixels. For example, the smaller the number of the pixels, the more the visual object may be positioned at a relatively far distance, and the larger the number of the pixels, the more the visual object may be positioned at a relatively close distance.

In an embodiment, the distance may be identified further based on at least one among a separation distance 607 between the cameras 601 and 602, a separation distance 609 between eyes of a user of the wearable device 103, or a separation distance 611 between the camera and the eye. For example, the distance may be identified further based on at least one among the separation distance 607, the separation distance 609, or the separation distance 611, along with the difference.

For example, the wearable device 103 may measure a distance to the external object 605 within about 50 cm to about 1.5 m using the cameras 601 and 602. At this time, a range of about 50 cm to about 1.5 m may represent a measurable distance. The measurable distance may represent a measurement range having accuracy greater than or equal to reference accuracy of the cameras 601 and 602. In other words, the wearable device 103 is not incapable of measuring a distance to an external object positioned at a distance outside the measurable distance by using the cameras 601 and 602. The accuracy (or reliability) of the measured distance to the external object positioned at the distance outside the measurable distance may be less than the reference accuracy. For example, the image obtained by the wearable device 103 using the cameras 601 and 602 may have a relatively high resolution (e.g., 3000x3000) compared to sensor information (or depth image) obtained using a first distance sensor 621 of FIG. 6B and sensor information (or depth image) obtained using a second distance sensor 641 of FIG. 6C. For example, the wearable device 103 may obtain (or capture) an image at a relatively high speed (e.g., 90 frames per second (fps)) using the cameras 601 and 602 compared to sensor information (or depth image) obtained using the first distance sensor 621 of FIG. 6B and sensor information (or depth image) obtained using the second distance sensor 641 of FIG. 6C.

FIG. 6B illustrates an example 620 for a method of measuring a distance to an external object 625 by using the first distance sensor 621 of the wearable device 103. The first distance sensor 621 of FIG. 6B may be included in a sensor 530 of FIG. 5. For example, the first distance sensor 621 may be an example of an I-ToF sensor.

Referring to the example 620, the wearable device 103 may emit light 627-1 toward the external object 625 through the first distance sensor 621. For example, the light 627-1 may be emitted through an emitter 622 of the first distance sensor 621. For example, the light 627-1 may include modulated light. For example, the wearable device 103 may receive light 627-2 reflected by the external object 625. For example, the light 627-2 may be received through a receiver 623. For example, the light 627-2 may have an attribute changed from the light 627-1. For example, a phase of the light 627-2 may be different from a phase of the light 627-1. The wearable device 103 may identify a distance to the external object 625 based on a phase difference between the lights 627-1 and 627-2.

For example, the wearable device 103 may measure the distance to the external object 625 within about 10 cm to about 1 m using the first distance sensor 621. At this time, a range of about 10 cm to about 1 m may represent a measurable distance. The measurable distance may represent a measurement range having accuracy greater than or equal to reference accuracy of the first distance sensor 621. In other words, the wearable device 103 is not incapable of measuring a distance to an external object positioned at a distance outside the measurable distance by using the first distance sensor 621. The accuracy (or reliability) of the measured distance to the external object positioned at the distance outside the measurable distance may be less than the reference accuracy. For example, first distance information obtained by the wearable device 103 using the first distance sensor 621 may include a depth image having a relatively intermediate resolution (e.g., 320x240) compared to images obtained using the cameras 601 and 602 of FIG. 6A and sensor information (or depth image) obtained using the second distance sensor 641 of FIG. 6C. For example, the wearable device 103 may obtain (or capture) a depth image according to at a relatively intermediate speed (e.g., 30 frames per second (fps)) using the first distance sensor 621 compared to images obtained using the cameras 601 and 602 of FIG. 6A and sensor information (or depth image) obtained using the second distance sensor 641 of FIG. 6C.

FIG. 6C illustrates an example 640 for a method of measuring a distance to an external object 645 by using the second distance sensor 641 of the wearable device 103. The second distance sensor 641 of FIG. 6C may be included in the sensor 530 of FIG. 5. For example, the second distance sensor 641 may be an example of a D-ToF sensor.

Referring to the example 640, the wearable device 103 may emit light 647 toward the external object 645 through the second distance sensor 641. For example, the light 647 may be emitted through an emitter 642 of the second distance sensor 641. For example, the light 647 may include an infrared laser (IR laser) of a light pulse method. For example, the wearable device 103 may receive the light 647 by the external object 645. For example, the reflected light 647 may be received through a receiver 643. For example, the wearable device 103 may identify the distance to the external object 645 by measuring the time between the timing at which the light 647 is emitted and the timing at which the light 647 is received.

For example, the wearable device 103 may measure the distance to the external object 645 within about 20 cm to about 5 m using the second distance sensor 641. At this time, a range of about 20 cm to about 5 m may represent a measurable distance. The measurable distance may represent a measurement range having accuracy greater than or equal to reference accuracy of the second distance sensor 641. In other words, the wearable device 103 is not incapable of measuring a distance to an external object positioned at a distance outside the measurable distance by using the second distance sensor 641. The accuracy (or reliability) of the measured distance to the external object positioned at the distance outside the measurable distance may be less than the reference accuracy. For example, second distance information obtained by the wearable device 103 using the second distance sensor 641 may include a depth image having a relatively low resolution (e.g., 24x24) compared to images obtained using the cameras 601 and 602 of FIG. 6A and sensor information (or depth image) obtained using the first distance sensor 621 of FIG. 6B. For example, the wearable device 103 may obtain (or capture) a depth image according to at a relatively low speed (e.g., 10 frames per second (fps)) using the second distance sensor 641 compared to images obtained using the cameras 601 and 602 of FIG. 6A and sensor information (or depth image) obtained using the first distance sensor 621 of FIG. 6B.

Referring to FIGS. 6A to 6C, the wearable device 103 may identify a distance to an external object by using a relatively large number (or relatively frequently obtained) of images having a relatively high resolution compared to the first distance sensor 621 and the second distance sensor 641 obtained using the cameras 601 and 602. At this time, for more accurate distance measurement, the wearable device 103 may further use the first distance sensor 621 and the second distance sensor 641. For example, the first distance sensor 621 may obtain a large number of distance information (or depth image) with a relatively high resolution compared to the second distance sensor 641. However, the first distance sensor 621 may obtain distance information on an external object of a relatively close distance compared to the second distance sensor 641.

In addition, in case that the external environment is an environment with a lower illuminance value than a reference illuminance, the distance identified using the image obtained through the cameras 601 and 602 may have low accurate (or reliability). Accordingly, the wearable device 103 may use the first distance sensor 621 or the second distance sensor 641. On the other hand, in case that a surface of the external object is composed of a material that reflects or absorbs light, or in case that diffuse reflection is caused (e.g., a corner/edge of the external object), a distance identified by using distance information (or depth image) obtained through the sensors 621 and 641 may have low accuracy (or reliability). Accordingly, the wearable device 103 may use the cameras 601 and 602.

FIG. 7 illustrates an example of an operation flow for a method in which a wearable device identifies a corrected distance according to a distance to an external object measured through a red-green-blue (RGB) camera and displays an image.

At least a portion of the method of FIG. 7 may be performed by a wearable device 103 of FIG. 5. For example, at least a portion of the method may be controlled by a processor 510 of the wearable device 103. In the following embodiment, each operation may be performed sequentially, but is not necessarily performed sequentially. For example, order of each operation may be changed, and at least two operations may be performed in parallel.

In operation 700, the wearable device 103 may obtain an image through a camera (e.g., an RGB camera). For example, the RGB camera may be included in a camera 540 of FIG. 5. For example, the RGB camera may include at least one RGB camera. For example, the wearable device 103 may obtain the image for a region including an external object of an external environment. For example, the image may represent visual information representing the region of the external environment. For example, the image may include a visual object corresponding to the external object. For example, a period of obtaining an image through the RGB camera may have a first time interval (e.g., a frame interval at 90 fps).

In operation 705, the wearable device 103 may obtain a distance to the external object using the obtained image. For example, the distance may be referred to as a temporary distance or an initial distance. For example, in case of using a plurality of RGB cameras, the wearable device 103 may obtain the distance based on parallax between images obtained from the plurality of RGB cameras. For example, the parallax between the images may represent a degree of parallax (or binocular parallax) of the visual object corresponding to the external object in each image. For example, the parallax may be determined according to a comparison between feature points for the visual object of each of the images. However, the present disclosure is not limited thereto. For example, the parallax may be determined based on a separation distance between the plurality of RGB cameras.

According to an embodiment, the wearable device 103 may determine a partial region of the external environment where the distance is positioned. For example, the partial region may be included in the region. For example, the region may include a plurality of partial regions. For example, the plurality of partial regions may include a first partial region, a second partial region, and a third partial region. For example, the first partial region may represent a region between a reference position and a first reference distance. For example, the first partial region may be referred to as a near-distance region. For example, the second partial region may represent a region between the first reference distance and a second reference distance. For example, the second partial region may be referred to as an intermediate distance region. For example, the third partial region may represent a region between the second reference distance and a third reference distance. For example, the third partial region may be referred to as a long-distance region. For example, the partial region may be defined by a range in which the distance to the external object is between a first reference value (e.g., the reference position, the first reference distance, the second reference distance) and a second reference value (e.g., the first reference distance, the second reference distance, the third reference distance).

According to an embodiment, the first reference distance may be determined based on a measurable distance by a first distance sensor (e.g., the first distance sensor 621 of FIG. 6B) of the wearable device 103. For example, the measurable distance of the first distance sensor may be about 10 cm to about 1 m. The above example is merely an example for convenience of description, and the present disclosure is not limited thereto. For example, the first reference distance may be set to a measurable maximum distance (e.g., about 1 m) of the first distance sensor.

According to an embodiment, the second reference distance may be determined based on a measurable distance by a camera (e.g., the RGB camera) of the wearable device 103. For example, the measurable distance of the RGB camera may be about 50 cm to about 1.5 m. The above example is merely an example for convenience of description, and the present disclosure is not limited thereto. For example, the second reference distance may be set to a measurable maximum distance (e.g., about 1.5 m) of the at least one camera. For example, the second reference distance may have a value greater than the first reference distance.

According to an embodiment, the third reference distance may be determined based on a measurable distance by the second distance sensor of the wearable device 103. For example, the measurable distance of the second distance sensor may be about 20 cm to about 5 m. The above example is merely an example for convenience of description, and the present disclosure is not limited thereto. For example, the third reference distance may be set to a measurable maximum distance (e.g., about 5 m) of the second distance sensor. For example, the third reference distance may have a value greater than the second reference distance.

According to an embodiment, the measurable distance may represent a measurement range having accuracy greater than or equal to reference accuracy of the RGB camera, the first distance sensor, and the second distance sensor. In other words, the wearable device 103 is not incapable of measuring a distance to an external object positioned at a distance outside the measurable distance by using the at least one camera, the first distance sensor, and the second distance sensor. The accuracy (or reliability) of the measured distance to the external object positioned at the distance outside the measurable distance may be less than the reference accuracy.

In operation 710, the wearable device 103 may determine whether the distance is less than the second reference distance. In the operation 710, in case that the distance to the external object is less than the second reference distance, the wearable device 103 may perform operation 715. In contrast, in the operation 710, in case that the distance to the external object is greater than or equal to the second reference distance, the wearable device 103 may perform operation 730.

In the operation 715, the wearable device 103 may determine whether the distance is less than the first reference distance. For example, in case that the distance to the external object is less than the second reference distance, the wearable device 103 may determine whether the distance to the external object is less than the first reference distance. In the operation 715, in case that the distance to the external object is less than the first reference distance, the wearable device 103 may perform operation 720. In contrast, in the operation 715, in case that the distance to the external object is greater than or equal to the second reference distance, the wearable device 103 may perform operation 725.

In the operation 720, the wearable device 103 may identify a corrected distance based on first distance information obtained through the first distance sensor and the distance to the external object. For example, in case that the distance to the external object is less than the first reference distance, the wearable device 103 may identify the corrected distance based on the first distance information and the distance to the external object. For example, the first distance information may include a depth image obtained through the first distance sensor. For example, a period in which the first distance information obtained through the first distance sensor is obtained may have a second time interval (e.g., a frame interval at 30 fps) longer than the first time interval.

In the operation 725, the wearable device 103 may identify the corrected distance based on the first distance information obtained through the first distance sensor, second distance information obtained through the second distance sensor, and the distance to the external object. For example, in case that the distance to the external object is greater than or equal to the first reference distance and is less than the second reference distance, the wearable device 103 may identify the corrected distance based on the first distance information, the second distance information, and the distance to the external object. For example, the second distance information may include a depth image obtained through the second distance sensor. For example, a period in which the second distance information obtained through the second distance sensor is obtained may have a third time interval (e.g., a frame interval at 10 fps) longer than the second time interval.

In the operation 730, the wearable device 103 may determine whether the distance to the external object is less than the third reference distance. For example, in case that the distance to the external object is greater than or equal to the second reference distance, the wearable device 103 may determine whether the distance to the external object is less than the third reference distance. In the operation 730, in case that the distance to the external object is less than the third reference distance, the wearable device 103 may perform operation 735. In contrast, in the operation 730, in case that the distance to the external object is greater than or equal to the third reference distance, the wearable device 103 may perform operation 745.

In the operation 735, the wearable device 103 may identify the corrected distance based on the second distance information obtained through the second distance sensor and the distance to the external object. For example, in case that the distance to the external object is greater than or equal to the second reference distance and is less than the third reference distance, the wearable device 103 may identify the corrected distance based on the second distance information and the distance to the external object.

In operation 740, the wearable device 103 may display the corrected image(s) to appear (or to be perceived) as being positioned at a depth according to the corrected distance. For example, according to the operations 720, 725, or 735, the wearable device 103 may display the corrected image(s) to appear (or to be perceived) as being positioned at the depth according to the corrected distance through at least one display (e.g., the display 510 of FIG. 5) of the wearable device 103. For example, the corrected image(s) may be an image corrected or reprojected from the image(s) obtained in the operation 705.

In operation 745, the wearable device 103 may display the generated image(s) to appear (or to be perceived) as being positioned at the depth according to the distance to the external object. For example, in case that the distance to the external object is greater than or equal to the third reference distance, the wearable device 103 may display the generated image(s) through the at least one display to appear (or to be perceived) as being positioned at the depth according to the distance to the external object obtained in the operation 705. In other words, the wearable device 103 may refrain from (or skip, delay, or exclude) performing correction of the image for an external object positioned in the remaining region different from the partial regions of the region.

Although not illustrated in FIG. 7, in case that the wearable device 103 determines that the distance to the external object is less than the first reference distance in the operation 715, the wearable device 103 may further determine whether the distance to the external object is included in a fourth partial region. For example, the fourth partial region may represent a region (e.g., about 50 cm to about 1 m) extending from a portion of the first partial region toward the second partial region to the first reference distance. For example, the fourth partial region may be determined based on a measurable minimum distance (e.g., about 50 cm) of the RGB camera and a measurable maximum distance (e.g., about 1 m) (or the first reference distance) of the first distance sensor. In case that the distance to the external object is included in the fourth partial region (or in case that the distance to the external object is greater than or equal to a fourth reference distance (e.g., the measurable minimum distance of the RGB camera) and is less than the first reference distance), the wearable device 103 may identify the corrected distance based on the first distance information, the second distance information, and the distance to the external object. In this case, a first weight to be applied to the first distance information may be greater than a second weight to be applied to the second distance information. In contrast, in the operation 725, the first weight to be applied to the first distance information may be smaller than the second weight to be applied to the second distance information.

In the example of FIG. 7, an example is described of determining data (e.g., the image, the first distance information, and the second distance information) to be used to identify the corrected distance by comparing the distance to the external object with a plurality of reference distances, but the present disclosure is not limited thereto. For example, the wearable device 103 may determine a ratio (or frequency of use) between the data to be used by comparing the distance and the plurality of reference distances.

For example, in case that the distance to the external object is less than the first reference distance, as in the example of the operation 720, the wearable device 103 may identify the corrected distance based on the distance to the external object, the first distance information, and the second distance information. At this time, a value of a weight (or the first weight) for the first distance information among the distance to the external object, the first distance information, and the second distance information may be the largest. The fact that the value of the first weight is the largest may represent that the first distance information is used at the highest frequency or is considered in the largest ratio when calculating the corrected distance.

In addition, in case that the distance to the external object is greater than or equal to the first reference distance and is less than the second reference distance, as in the example of the operation 725, the wearable device 103 may identify the corrected distance based on the distance to the external object, the first distance information, and the second distance information. A value of a weight (or a third weight) for the distance to the external object among the distance to the external object, the first distance information, and the second distance information may be the largest. The fact that the value of the third weight is the largest may represent that the distance to the external object is used at the highest frequency or is considered in the largest ratio when calculating the corrected distance.

In addition, in case that the distance to the external object is greater than or equal to the second reference distance and is less than the third reference distance, as in the example of the operation 735, the wearable device 103 may identify the corrected distance based on the distance to the external object, the first distance information, and the second distance information. A value of a weight (or the second weight) for the second distance information among the distance to the external object, the first distance information, and the second distance information may be the largest. The fact that the value of the second weight is the largest may represent that the second distance information is used at the highest frequency or is considered in the largest ratio when calculating the corrected distance.

The first reference distance, the second reference distance, and the third reference distance are illustrated as being determined based on a measurable distance of each of components (e.g., the first distance sensor, the second distance sensor, or at least one camera (or image sensor)), but the present disclosure is not limited thereto. According to an embodiment, each of the first reference distance, the second reference distance, and the third reference distance may be adjusted (or changed) by using an attribute (or performance) of each sensor, information (e.g., illuminance) on the external environment, or sensor information obtained from each sensor.

According to an embodiment, the wearable device 103 may identify the corrected distance by further using additional information obtained through the first distance sensor, the second distance sensor, or the RGB camera. For example, the wearable device 103 may increase the accuracy of the corrected distance by using additional information obtained through the first distance sensor, the second distance sensor, or the RGB camera in each of the operations 720, 725, or 735. For example, the additional information may include sensor information representing a distance to another external object obtained through the first distance sensor or the second distance sensor, or a distance to another external object obtained through the image(s) obtained through the RGB camera.

FIG. 8A illustrates an example of a saliency map. FIG. 8A illustrates an example 800 of saliency maps 820 and 840 obtained from images 810 and 830 obtained through a camera (e.g., the camera 540 of FIG. 5) of a wearable device 103. The saliency map may include an image in which at least a portion of the image obtained through the camera 540 is visually emphasized (e.g., highlighted) according to the likelihood that a gaze of a user of the wearable device 103 will be positioned. For example, the likelihood that the gaze will be positioned may represent the probability that the user will look at by focusing. For example, the saliency map may be referred to as an interest map.

Referring to the example 800, the wearable device 103 may obtain the image 810 and the image 830 through the camera 540. For example, the image 810 may include a visual object 811 corresponding to an external object (e.g., a dog) in an external environment. For example, the image 830 may include visual objects 831 and 832 corresponding to external objects (e.g., vehicles) in the external environment.

According to an embodiment, the wearable device 103 may obtain the saliency maps 820 and 840 from the images 810 and 830 according to an image analysis technique. For example, the image analysis technique may include an estimation method using statistical information on a movement of an external object, statistical information on an image, or edge information on a boundary surface of an external object (or a visual object). Alternatively, for example, the wearable device 103 may obtain the saliency maps 820 and 840 through the camera 540.

Referring to the example 800, the saliency map 820 may include a first portion 821 and a second portion 822 for the visual object 811. For example, the first portion 821 may represent a portion of the image 810 in which the user's gaze is relatively likely to be positioned. For example, the second portion 822 may represent a portion of the image 810 in which the user's gaze is relatively less likely to be positioned compared to the first portion 821. For example, a portion other than the second portion 822 may represent a portion of the image 810 in which the user's gaze is unlikely to be positioned. In addition, the saliency map 840 may include a first portion 841 and a second portion 842 for the visual objects 831 and 832. For example, the first portion 841 may represent a portion of the image 830 in which the user's gaze is relatively likely to be positioned compared to the second portion 842. For example, the second portion 842 may represent a portion of the image 830 in which the user's gaze is relatively less likely to be positioned compared to the first portion 841. For example, a portion other than the second portion 842 may represent a portion of the image 830 in which the user's gaze is unlikely to be positioned.

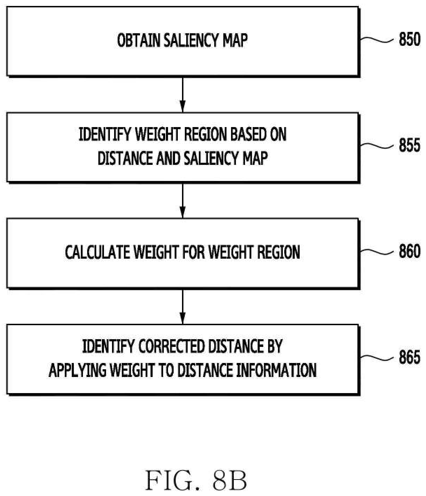

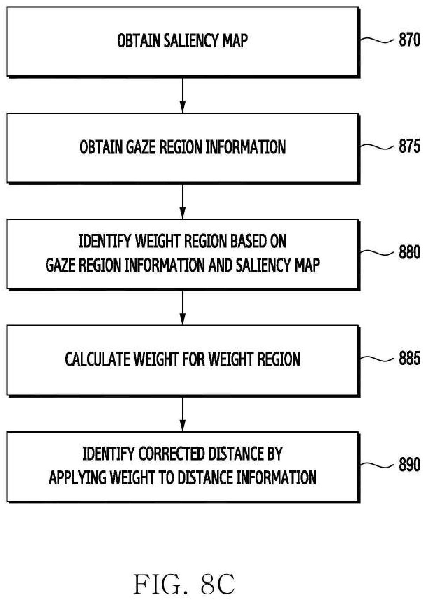

Referring to the described above, as moving from a boundary of the first portion 821 or 841 toward a boundary of the second portion 822 or 842, the likelihood may gradually decrease. The wearable device 103 may calculate a weight between data (e.g., an image obtained through the camera 540, first distance information obtained through a first distance sensor, and second distance information obtained through a second distance sensor) to be used for measuring a distance to an external object by using the obtained saliency map 820 or 840, and identify a corrected distance by applying the calculated weight. Hereinafter, FIGS. 8B and 8C may be referred to in detail related thereto.

FIGS. 8B and 8C illustrate examples of an operation flow for a method in which a wearable device identifies a corrected distance by using a weight based on a saliency map.

At least a portion of the methods of FIGS. 8B and 8C may be performed by a wearable device 103 of FIG. 5. For example, at least a portion of the method may be controlled by a processor 510 of the wearable device 103. In the following embodiment, each operation may be performed sequentially, but is not necessarily performed sequentially. For example, order of each operation may be changed, and at least two operations may be performed in parallel.

Referring to FIG. 8B, in operation 850, the wearable device 103 may obtain a saliency map. For example, the saliency map may be obtained from an image obtained through a camera 540, as described in an example 800 of FIG. 8A. Alternatively, for example, the saliency map may be obtained through the camera 540.

In operation 855, the wearable device 103 may identify a weight region based on a distance and the saliency map. For example, the distance may represent a distance to an external object obtained by using the image(s) obtained through the camera 540. For example, the weight region may include a partial region where the distance to the external object is positioned. For example, the partial region may be determined based on a plurality of reference distances. For example, the weight region may be included in a second partial region (e.g., the second partial region 412 of FIG. 4). However, the present disclosure is not limited thereto. For example, the weight region may be included in a first partial region (e.g., the first partial region 411 of FIG. 4), a third partial region (e.g., the third partial region 413 of FIG. 4), or a fourth partial region (e.g., the fourth partial region 414 included in the first partial region 411 of FIG. 4).

In operation 860, the wearable device 103 may calculate a weight for the weight region. For example, the wearable device 103 may calculate a weight (or a third weight) for the distance to the external object, a weight (or a first weight) for first distance information (or a depth image) obtained through a first distance sensor (e.g., the first distance sensor 621 of FIG. 6B), and a weight (or a second weight) for second distance information (or a depth image) obtained through a second distance sensor (e.g., the second distance sensor 641 of FIG. 6C). For example, the wearable device 103 may calculate the first weight for the first distance information, the second weight for the second distance information, and the third weight for the distance to the external object with respect to the weight region. However, the present disclosure is not limited thereto. For example, the wearable device 103 may calculate the first weight and the second weight, excluding the third weight.

In operation 865, the wearable device 103 may identify the corrected distance by applying the weight to the distance information. For example, the wearable device 103 may identify the corrected distance based on the distance to the external object, the first distance information, and the second distance information. At this time, the corrected distance may be identified by applying the first weight to the first distance information, the second weight to the second distance information, and the third weight to the distance to the external object. For example, the first weight, the second weight, and the third weight may be referred to as an operating ratio between an RGB camera and distance sensors. Alternatively, for example, the corrected distance may be identified by applying the first weight to the first distance information and the second weight to the second distance information. This may vary according to a method (e.g., an interpolation method or a normalized method) used for identifying the corrected distance.

Referring to FIG. 8C, in operation 870, the wearable device 103 may obtain the saliency map. For example, the saliency map may be obtained from the image obtained through the camera 540, as described in the example 800 of FIG. 8A.

In operation 875, the wearable device 103 may obtain gaze region information. For example, the wearable device 103 may obtain the gaze region information representing a region (or gaze region) where the user's gaze is positioned through a gaze tracking camera. For example, the gaze tracking camera may be an example of a gaze tracking camera 260-1 of FIG. 2B or cameras 260-1 of FIG. 3A. In other words, unlike the saliency map, the gaze region information may represent a region where the user's gaze is actually positioned.

In operation 880, the wearable device 103 may identify the weight region based on the gaze region information and the saliency map. For example, the weight region may include a partial region representing a region where the first portion (e.g., the first portion 821 or 842 of FIG. 8A) of the saliency map and the gaze region information overlap. For example, the partial region may be determined based on a plurality of reference distances. For example, the weight region may be included in the first partial region (e.g., the first partial region 411 of FIG. 4), the third partial region (e.g., the third partial region 413 of FIG. 4), or the fourth partial region (e.g., the fourth partial region 414 included in the first partial region 411 of FIG. 4).

In operation 885, the wearable device 103 may calculate the weight for the weight region. For example, the wearable device 103 may calculate the weight (or the third weight) for the distance to the external object, the weight (or the first weight) for the first distance information (or the depth image) obtained through the first distance sensor (e.g., the first distance sensor 621 of FIG. 6B), and the weight (or the second weight) for the second distance information (or the depth image) obtained through the second distance sensor (e.g., the second distance sensor 641 of FIG. 6C). For example, the wearable device 103 may calculate at least one weight for the weight region. For example, the wearable device 103 may calculate the first weight for the first distance information, the second weight for the second distance information, and/or the third weight for the distance to the external object. However, the present disclosure is not limited thereto. According to an embodiment, the wearable device 103 may calculate at least one weight. For example, the wearable device 103 may calculate the first weight and the second weight, excluding the third weight.

In operation 890, the wearable device 103 may identify the corrected distance by applying the weight to the distance information. For example, the wearable device 103 may identify the corrected distance based on the distance to the external object, the first distance information, and the second distance information. At this time, the corrected distance may be identified by applying the first weight to the first distance information, the second weight to the second distance information, and the third weight to the distance to the external object. For example, the first weight, the second weight, and the third weight may be referred to as the operating ratio between the RGB camera and the distance sensors. Alternatively, for example, the corrected distance may be identified by applying the first weight to the first distance information and the second weight to the second distance information. This may vary according to the method (e.g., the interpolation method or the normalized method) used for identifying the corrected distance.

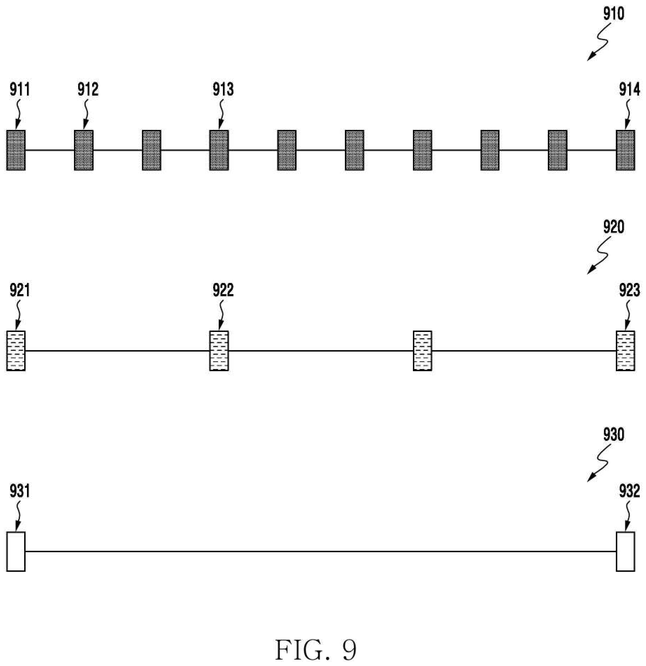

FIG. 9 illustrates an example of a speed measuring a distance by at least one sensor. At least one sensor may include an RGB camera, an indirect-time of flight (I-ToF) sensor, and a direct-ToF (D-ToF) sensor. However, the present disclosure is not limited to the above-described sensors.

FIG. 9 illustrates an example of a speed at which a wearable device 103 obtains data for measuring a distance to an external object by using the RGB camera, the I-ToF sensor, and the D-ToF sensor. According to an embodiment, the speed at which the wearable device obtains data may be referred to as a distance measurement speed or a period at which data is obtained. The RGB camera may be an example of a camera 540 of FIG. 5 or cameras 601 and 602 of FIG. 6A. The I-ToF sensor may be an example of a sensor 530 of FIG. 5 or a first distance sensor 621 of FIG. 6B. The D-ToF sensor may be an example of the sensor 530 of FIG. 5 or a second distance sensor 641 of FIG. 6C.

Referring to FIG. 9, a first example 910 in which the wearable device 103 obtains an image through the RGB camera, a second example 920 in which the wearable device 103 obtains first distance information (or depth image) through the I-ToF sensor, and a third example 930 in which the wearable device 103 obtains second distance information (or depth image) through the D-ToF sensor are illustrated.

According to an embodiment, referring to the first example 910, the wearable device 103 may obtain an image according to a period having a first time interval through the RGB camera. For example, the wearable device 103 may obtain the image from each of frames 911, 912, 913, and 914. For example, the first time interval may represent a time length between the frame 911 and the frame 912.

According to an embodiment, referring to the second example 920, the wearable device 103 may obtain first distance information (or a depth image) according to a period having a second time interval through the I-ToF sensor. For example, the wearable device 103 may obtain the first distance information from each of frames 921, 922, and 923. For example, the second time interval may represent a time length between the frame 921 and the frame 922. For example, the second time interval may be longer than the first time interval.

According to an embodiment, referring to the third example 930, the wearable device 103 may obtain second distance information (or a depth image) according to a period having a third time interval through the D-ToF sensor. For example, the wearable device 103 may obtain the second distance information from each of frames 931 and 932. For example, the third time interval may represent a time length between the frame 931 and the frame 932. For example, the third time interval may be longer than the second time interval.

At timing corresponding to the frames 911, 921, and 931, the wearable device 103 may obtain the image, the first distance information, and the second distance information. The wearable device 103 may identify a distance by using the image obtained from the frame 911. The wearable device 103 may identify a corrected distance based on at least one among the distance to the external object, the first distance information, and the second distance information. For example, in case that the distance to the external object is less than a first reference distance, the wearable device 103 may identify the corrected distance based on the distance to the external object and the first distance information. For example, in case that the distance to the external object is greater than or equal to the first reference distance and is less than a second reference distance, the wearable device 103 may identify the corrected distance based on the distance to the external object, the first distance information, and the second distance information. For example, in case that the distance to the external object is greater than or equal to the second reference distance and is less than a third reference distance, the wearable device 103 may identify the corrected distance based on the distance to the external object and the second distance information. For example, in case that the distance to the external object is less than the third reference distance, the wearable device 103 may use the distance to the external object. For example, the wearable device 103 may identify the corrected distance by using an interpolation method at the timing corresponding to the frames 911, 921, and 931.

At timing corresponding to the frame 912, the wearable device 103 may obtain the image. The wearable device 103 may identify the distance by using the image obtained from the frame 912. The wearable device 103 may identify the corrected distance based on at least one among the distance to the external object, the first distance information obtained from the frame 921, and the second distance information obtained from the frame 931. For example, in case that the distance to the external object is less than the first reference distance, the wearable device 103 may identify the corrected distance based on the distance to the external object and the first distance information. For example, in case that the distance to the external object is greater than or equal to the first reference distance and is less than the second reference distance, the wearable device 103 may identify the corrected distance based on the distance to the external object, the first distance information, and the second distance information. For example, in case that the distance to the external object is greater than or equal to the second reference distance and is less than the third reference distance, the wearable device 103 may identify the corrected distance based on the distance to the external object and the second distance information. For example, in case that the distance to the external object is less than the third reference distance, the wearable device 103 may use the distance to the external object. For example, the wearable device 103 may identify the corrected distance by using a normalized method at the timing corresponding to the frame 912.

At timing corresponding to the frame 913 and the frame 922, the wearable device 103 may obtain the image and the first distance information. The wearable device 103 may identify the distance by using the image obtained from the frame 913. The wearable device 103 may identify the corrected distance based on at least one among the distance to the external object, the first distance information obtained from the frame 922, and the second distance information obtained from the frame 931. For example, in case that the distance to the external object is less than the first reference distance, the wearable device 103 may identify the corrected distance based on the distance to the external object and the first distance information. For example, in case that the distance to the external object is greater than or equal to the first reference distance and is less than the second reference distance, the wearable device 103 may identify the corrected distance based on the distance to the external object, the first distance information, and the second distance information. For example, in case that the distance to the external object is greater than or equal to the second reference distance and is less than the third reference distance, the wearable device 103 may identify the corrected distance based on the distance to the external object and the second distance information. For example, in case that the distance to the external object is less than the third reference distance, the wearable device 103 may use the distance to the external object. For example, the wearable device 103 may identify the corrected distance by using the normalized method at the timing corresponding to the frame 913 and the frame 922. Therefore, the frames from each sensor do not need to be precisely synchronized, and the most recently available frames that most closely align in time can be selected from each sensor to perform distance correction.

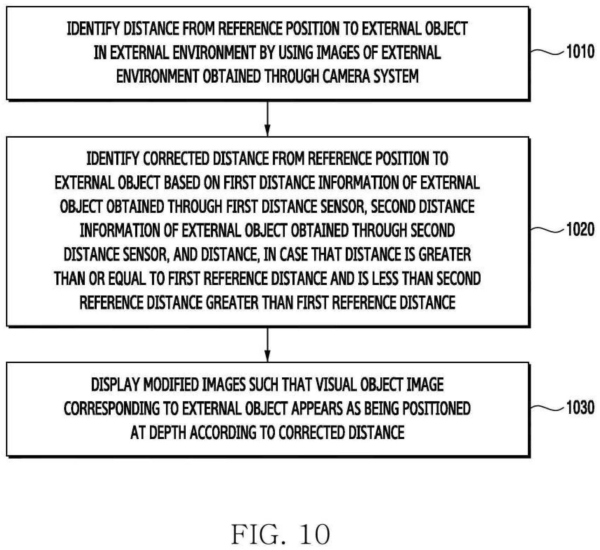

FIG. 10 illustrates an example of an operation flow for a method in which a wearable device identifies a corrected distance to an external object by using a plurality of sensors and at least one camera and displays an image.

At least a portion of a method of FIG. 10 may be performed by a wearable device 103 of FIG. 5. For example, at least a portion of the method may be controlled by a processor 510 of the wearable device 103. In the following embodiment, each operation may be performed sequentially, but is not necessarily performed sequentially. For example, order of each operation may be changed, and at least two operations may be performed in parallel.

In operation 1010, the wearable device 103 may identify a distance from a reference position to an external object in an external environment by using images of the external environment obtained through a camera system. For example, the camera system of the wearable device 103 may be included in a camera 540 of FIG. 5. For example, the images may represent visual information representing a region of the external environment, obtained through at least one camera of the camera system. For example, the image may include a visual object corresponding to the external object. For example, a period of obtaining an image through at least one camera may have a first time interval (e.g., a frame interval at 90 fps).

According to an embodiment, the wearable device 103 may obtain a distance to the external object by using the obtained image. For example, the distance to the external object may be referred to as a temporary distance or an initial distance. For example, in case that at least one camera includes a plurality of RGB cameras, the wearable device 103 may obtain the distance to the external object based on parallax between images obtained from the plurality of RGB cameras. The reference position may include a position of at least one camera disposed on the wearable device 103. For example, the reference position may be determined based on a portion where at least one lens of at least one camera is positioned in the wearable device 103. For example, in case that at least one camera includes a plurality of cameras, the reference position may be positioned between a plurality of lenses of the plurality of cameras. For example, the reference position may correspond to a position of a sensor portion (or plane, image plane) inside the camera.

According to an embodiment, the wearable device 103 may determine a partial region of the external environment where the distance to the external object is positioned. For example, the partial region may be included in the region. For example, the region may include a plurality of partial regions. For example, the plurality of partial regions may include a first partial region, a second partial region, and a third partial region. For example, the first partial region may represent a region between a reference position and a first reference distance. For example, the first partial region may be referred to as a near-distance region. For example, the second partial region may represent a region between the first reference distance and a second reference distance. For example, the second partial region may be referred to as an intermediate distance region. For example, the third partial region may represent a region between the second reference distance and a third reference distance. For example, the third partial region may be referred to as a long-distance region. For example, the partial region may be defined by a range in which the distance to the external object is between a first reference value (e.g., the reference position, the first reference distance, the second reference distance) and a second reference value (e.g., the first reference distance, the second reference distance, the third reference distance).

For example, the first reference distance may be determined based on a measurable distance by a first distance sensor (e.g., the first distance sensor 621 of FIG. 6B) of the wearable device 103. For example, the measurable distance of the first distance sensor may be about 10 cm to about 1 m. The above example is merely an example for convenience of description, and the present disclosure is not limited thereto. For example, the first reference distance may be set to a measurable maximum distance (e.g., about 1 m) of the first distance sensor.

For example, the second reference distance may be determined based on a measurable distance by the RGB camera of the wearable device 103. For example, the measurable distance of the RGB camera may be about 50 cm to about 1.5 m. The above example is merely an example for convenience of description, and the present disclosure is not limited thereto. For example, the second reference distance may be set to a measurable maximum distance (e.g., about 1.5 m) of at least one camera. For example, the second reference distance may have a value greater than the first reference distance.

For example, the third reference distance may be determined based on a measurable distance by the second distance sensor of the wearable device 103. For example, the measurable distance of the second distance sensor may be about 20 cm to about 5 m. The above example is merely an example for convenience of description, and the present disclosure is not limited thereto. For example, the third reference distance may be set to a measurable maximum distance (e.g., about 5 m) of the second distance sensor. For example, the third reference distance may have a value greater than the second reference distance.

The measurable distance may represent a measurement range having accuracy greater than or equal to reference accuracy of the RGB camera, the first distance sensor, and the second distance sensor. In other words, the wearable device 103 is not incapable of measuring a distance to an external object positioned at a distance outside the measurable distance by using at least one camera, the first distance sensor, and the second distance sensor. The accuracy (or reliability) of the measured distance to the external object positioned at the distance outside the measurable distance may be less than the reference accuracy.

In operation 1020, in case that the distance to the external object is greater than or equal to the first reference distance and is less than the second reference distance greater than the first reference distance, the wearable device 103 may identify a corrected distance from the reference position to the external object based on first distance information of the external object obtained through the first distance sensor, second distance information of the external object obtained through the second distance sensor, and the distance to the external object.

According to an embodiment, in case that the distance to the external object is less than the first reference distance, the wearable device 103 may identify the corrected distance from the reference position to the external object based on the first distance information of the external object obtained through the first distance sensor and the distance to the external object.

According to an embodiment, the wearable device 103 may determine whether the distance to the external object is less than the second reference distance. In case that the distance to the external object is less than the second reference distance, the wearable device 103 may determine whether the distance to the external object is less than the first reference distance. In contrast, in case that the distance to the external object is greater than or equal to the second reference distance, the wearable device 103 may determine whether the distance to the external object is less than the third reference distance.

For example, in case that the distance to the external object is less than the first reference distance, the wearable device 103 may identify the corrected distance based on the first distance information and the distance to the external object. For example, the first distance information may include a depth image obtained through the first distance sensor. For example, a period in which the first distance information obtained through the first distance sensor is obtained may have a second time interval (e.g., a frame interval at 30 fps) longer than the first time interval.

For example, in case that the distance to the external object is greater than or equal to the first reference distance and is less than the second reference distance, the wearable device 103 may identify the corrected distance based on the first distance information, the second distance information, and the distance to the external object. For example, the second distance information may include a depth image obtained through the second distance sensor. For example, a period in which the second distance information obtained through the second distance sensor is obtained may have a third time interval (e.g., a frame interval at 10 fps) longer than the second time interval.

For example, in case that the distance to the external object is greater than or equal to the second reference distance and is less than the third reference distance, the wearable device 103 may identify the corrected distance based on the second distance information and the distance to the external object.

In operation 1030, the wearable device 103 may display a modified (or corrected) image(s) such that a visual object image (or visual object) corresponding to an external object appears (or to be perceived) as being positioned at a depth according to the corrected distance. For example, the wearable device 103 may display the modified image through a display system including at least one display. For example, the modified image may be an image corrected or reprojected from the image. The corrected image or reprojected image can adjust for viewing distance differences between cameras of the wearable device 103 and eyes of a user wearing the wearable device 103 such that the appearance of the external object may be perceived by the user as if the external object was positioned at a depth of natural viewing as may be experienced without an offset which can occur due to the thickness of the wearable device 103 and camera positioning relative to the eyes of the user.

As a further example, in case that the distance to the external object is greater than or equal to the third reference distance, the wearable device 103 may display the generated image(s) through the at least one display to appear (or to be perceived) as being positioned at the depth according to the distance to the external object. In other words, the wearable device 103 may refrain from (or skip, delay, or exclude) performing correction of the image for an external object positioned in the remaining region different from the partial regions of the region.

Although not illustrated in FIG. 10, in case that the wearable device 103 determines that the distance to the external object is less than the first reference distance, the wearable device 103 may further determine whether the distance to the external object is included in a fourth partial region. For example, the fourth partial region may represent a region (e.g., about 50 cm to about 1 m) extending from a portion of the first partial region toward the second partial region to the first reference distance. For example, the fourth partial region may be determined based on a measurable minimum distance (e.g., about 50 cm) of the RGB camera and a measurable maximum distance (e.g., about 1 m) (or the first reference distance) of the first distance sensor. In case that the distance to the external object is included in the fourth partial region (or in case that the distance to the external object is greater than or equal to a fourth reference distance (e.g., the measurable minimum distance of the RGB camera) and is less than the first reference distance), the wearable device 103 may identify the corrected distance based on the first distance information, the second distance information, and the distance to the external object. In this case, a first weight to be applied to the first distance information may be greater than a second weight to be applied to the second distance information. In contrast, in operation 725, the first weight to be applied to the first distance information may be smaller than the second weight to be applied to the second distance information.

Although not illustrated in FIG. 10, according to an embodiment, the wearable device 103 may identify the corrected distance further based on a saliency map. For example, the wearable device 103 may calculate a weight to be applied to the distance to the external object obtained using the image, the first distance information of the first distance sensor, and the second distance information of the second distance sensor based on the saliency map including information on a user's region of interest. For example, the region of interest may be referred to as a weight region. For example, the wearable device 103 may adjust an operating ratio between at least one camera and sensors by applying the calculated weight to the distance to the external object, the first distance information, and the second distance information. In addition, for example, the wearable device 103 may identify the region of interest by further using a region (or gaze range) to which the user's gaze is directed, along with the saliency map.

According to an embodiment, the wearable device 103 may identify the weight region based on gaze region information and the saliency map. For example, the weight region may include a partial region representing a region where a first portion (e.g., the first portion 821 or 842 of FIG. 8A) of the saliency map and the gaze region information overlap. For example, the partial region may be determined based on a plurality of reference distances. For example, the weight region may be included in the first partial region (e.g., the first partial region 411 of FIG. 4), the third partial region (e.g., the third partial region 413 of FIG. 4), or the fourth partial region (e.g., the fourth partial region 414 included in the first partial region 411 of FIG. 4).

According to an embodiment, the wearable device 103 may calculate a weight for the weight region. For example, the wearable device 103 may calculate a weight (or a third weight) for the distance to the external object, a weight (or a first weight) for the first distance information (or the depth image) obtained through the first distance sensor (e.g., the first distance sensor 621 of FIG. 6B), and a weight (or the second weight) for the second distance information (or the depth image) obtained through the second distance sensor (e.g., the second distance sensor 641 of FIG. 6C). For example, the wearable device 103 may calculate at least one weight for the weight region. For example, the wearable device 103 may calculate the first weight for the first distance information, the second weight for the second distance information, and/or the third weight for the distance to the external object. However, the present disclosure is not limited thereto. According to an embodiment, the wearable device 103 may calculate at least one weight. For example, the wearable device 103 may calculate the first weight and the second weight, excluding the third weight. According to an embodiment, the wearable device 103 may identify the corrected distance by applying the weight to the distance information.

According to an embodiment, the wearable device 103 may identify the corrected distance based on scene analysis for the image obtained through at least one camera. For example, the scene analysis may include analysis based on SLAM. For example, the wearable device 103 may identify the position of each of one or more external objects in the image based on the scene analysis. For example, the wearable device 103 may store information on the position of each of the one or more external objects as scene understanding data. For example, the scene understanding data may be used in a software application executed by the wearable device 103. For example, the scene understanding data may be used for a service provided by the software application. In case that the scene understanding data is stored in a number greater than or equal to reference data number, the wearable device 103 may recognize that one or more objects of interest are positioned in a specific partial region among the partial regions. For example, the wearable device 103 may identify the specific partial region in which the one or more objects of interest are positioned as the region of interest (or weight region). For example, the object of interest may include an external object that the user is interested in. Accordingly, the wearable device 103 may calculate a weight to be applied to the distance to the external object obtained through the image, the first distance information of the first distance sensor, and the second distance information of the second distance sensor. For example, the wearable device 103 may adjust the operating ratio between the sensors by applying the calculated weight to the distance to the external object, the first distance information, and the second distance information.

According to an embodiment, the wearable device 103 may identify the corrected distance based on the user's gesture. For example, the wearable device 103 may identify the gesture or interaction by the user's hand through a sensor or a camera. In case of identifying the gesture or interaction, the wearable device 103 may identify the first partial region (e.g., the first partial region 411 of FIG. 4) as a region of interest, and accordingly calculate a weight to be applied to the distance to the external object obtained through the image and the first distance information of the first distance sensor. However, the present disclosure is not limited thereto. For example, in case of identifying the gesture or interaction, the wearable device 103 may identify the fourth partial region (e.g., the fourth partial region 414 of FIG. 4) in the first partial region as a region of interest, and calculate a weight to be applied to the distance to the external object obtained through the image, the first distance information of the first distance sensor, and the second distance information of the second distance sensor. Alternatively, for example, in case of identifying the gesture or interaction, the wearable device 103 may identify the first partial region as a region of interest, and calculate a weight to be applied to the distance to the external object obtained through the image, the first distance information of the first distance sensor, and the second distance information of the second distance sensor. In this case, for higher accuracy even in the first partial region, the wearable device 103 may identify the corrected distance to the external object by using the second distance information together with the first distance information.

According to an embodiment, in case that illuminance of the external environment is less than reference illuminance, the wearable device 103 may identify the distance to the external object of the external environment based on the second distance information of the second distance sensor instead of the image obtained from at least one camera. By comparing the distance to the external object identified based on the second distance information with the partial regions, the wearable device 103 may determine distance information to be used.

According to an embodiment, in case that a surface of the external object is composed of a material that reflects light, the wearable device 103 may calculate a weight to be applied to the image (or the distance to the external object obtained using the image) obtained through at least one camera as a relatively higher value compared to distance information obtained from the first distance sensor and the second distance sensor. In addition, in case of processing a region (e.g., a periphery (or corner) portion of the external object) where the light is scattered in the external environment, the wearable device 103 may calculate a weight to be applied to the image (or the distance obtained using the image) obtained through at least one camera as a relatively higher value compared to distance information obtained from the first distance sensor and the second distance sensor.

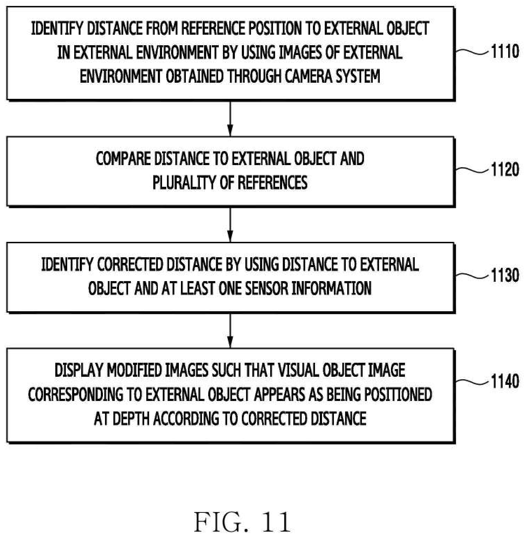

FIG. 11 illustrates an example of an operation flow for a method in which a wearable device identifies a corrected distance to an external object through comparison between a distance to the external object obtained by using at least one camera and a plurality of references and displays an image.

At least a portion of a method of FIG. 11 may be performed by a wearable device 103 of FIG. 5. For example, at least a portion of the method may be controlled by a processor 510 of the wearable device 103. In the following embodiment, each operation may be performed sequentially, but is not necessarily performed sequentially. For example, order of each operation may be changed, and at least two operations may be performed in parallel.

In operation 1110, the wearable device 103 may identify a distance from a reference position to an external object in an external environment by using images of the external environment obtained through a camera system. For example, the camera system of the wearable device 103 may be included in a camera 540 of FIG. 5. For example, the images may represent visual information representing a region of the external environment, obtained through at least one camera of the camera system. For example, the image may include a visual object corresponding to the external object. For example, a period of obtaining an image through at least one camera may have a first time interval (e.g., a frame interval at 90 fps).

According to an embodiment, the wearable device 103 may obtain a distance to the external object by using the obtained image. For example, the distance to the external object may be referred to as a temporary distance or an initial distance. For example, in case that at least one camera includes a plurality of RGB cameras, the wearable device 103 may obtain the distance to the external object based on parallax between images obtained from the plurality of RGB cameras. The reference position may include a position of at least one camera disposed on the wearable device 103. For example, the reference position may be determined based on a portion where at least one lens of at least one camera is positioned in the wearable device 103. For example, in case that at least one camera includes a plurality of cameras, the reference position may be positioned between a plurality of lenses of the plurality of cameras. For example, the reference position may correspond to a position of a sensor portion (or plane, image plane) inside the camera.

According to an embodiment, the wearable device 103 may determine a partial region of the external environment where the distance to the external object is positioned. For example, the partial region may be included in the region. For example, the region may include a plurality of partial regions. For example, the plurality of partial regions may include a first partial region, a second partial region, and a third partial region. For example, the first partial region may represent a region between a reference position and a first reference distance. For example, the first partial region may be referred to as a near-distance region. For example, the second partial region may represent a region between the first reference distance and a second reference distance. For example, the second partial region may be referred to as an intermediate distance region. For example, the third partial region may represent a region between the second reference distance and a third reference distance. For example, the third partial region may be referred to as a long-distance region. For example, the partial region may be defined by a range in which the distance to the external object is between a first reference value (e.g., the reference position, the first reference distance, the second reference distance) and a second reference value (e.g., the first reference distance, the second reference distance, the third reference distance).

For example, the first reference distance may be determined based on a measurable distance by a first distance sensor (e.g., the first distance sensor 621 of FIG. 6B) of the wearable device 103. For example, the measurable distance of the first distance sensor may be about 10 cm to about 1 m. The above example is merely an example for convenience of description, and the present disclosure is not limited thereto. For example, the first reference distance may be set to a measurable maximum distance (e.g., about 1 m) of the first distance sensor.

For example, the second reference distance may be determined based on a measurable distance by the RGB camera of the wearable device 103. For example, the measurable distance of the RGB camera may be about 50 cm to about 1.5 m. The above example is merely an example for convenience of description, and the present disclosure is not limited thereto. For example, the second reference distance may be set to a measurable maximum distance (e.g., about 1.5 m) of at least one camera. For example, the second reference distance may have a value greater than the first reference distance.

For example, the third reference distance may be determined based on a measurable distance by the second distance sensor of the wearable device 103. For example, the measurable distance of the second distance sensor may be about 20 cm to about 5 m. The above example is merely an example for convenience of description, and the present disclosure is not limited thereto. For example, the third reference distance may be set to a measurable maximum distance (e.g., about 5 m) of the second distance sensor. For example, the third reference distance may have a value greater than the second reference distance.

The measurable distance may represent a measurement range having accuracy greater than or equal to reference accuracy of the RGB camera, the first distance sensor, and the second distance sensor. In other words, the wearable device 103 is not incapable of measuring a distance to an external object positioned at a distance outside the measurable distance by using at least one camera, the first distance sensor, and the second distance sensor. The accuracy (or reliability) of the measured distance to the external object positioned at the distance outside the measurable distance may be less than the reference accuracy.

In operation 1120, the wearable device 103 may compare the distance to the external object with a plurality of references. The references can be associated with measurable distances (e.g., distance ranges) of the sensors. For example, the plurality of references may include a first reference and a second reference. For example, the first reference may include a condition that the distance to the external object is less than the first reference distance. The second reference may include a condition that the distance to the external object is greater than or equal to the first reference distance and is less than the second reference distance greater than the first reference distance. In operation 1130, the wearable device 103 may identify the corrected distance using the distance to the external object and at least one sensor information of the sensors. For example, the wearable device 103 may identify the distance to the external object and the corrected distance using at least one sensor information according to a result of the comparison.

According to an embodiment, in case that the first reference is satisfied, the wearable device 103 may identify the corrected distance from the reference position to the external object based on the first distance information of the external object obtained through the first distance sensor and the distance to the external object.

According to an embodiment, in case that the second reference is satisfied, the wearable device 103 may identify the corrected distance from the reference position to the external object based on the first distance information of the external object obtained through the first distance sensor, the second distance information of the external object obtained through the second distance sensor, and the distance to the external object.

For example, the first distance information may include a depth image obtained through the first distance sensor. For example, a period in which the first distance information obtained through the first distance sensor is obtained may have a second time interval (e.g., a frame interval at 30 fps) longer than the first time interval. For example, the second distance information may include a depth image obtained through the second distance sensor. For example, a period in which the second distance information obtained through the second distance sensor is obtained may have a third time interval (e.g., a frame interval at 10 fps) longer than the second time interval.

In the above example, an example in which the plurality of references include the first reference and the second reference is described, but the present disclosure is not limited thereto. For example, the plurality of references may include three or more references.

According to an embodiment, in case that a third condition in which the distance to the external object is greater than the second reference distance and is less than the third reference distance is satisfied, the wearable device 103 may identify the corrected distance based on the second distance information and the distance to the external object. Alternatively, in case that a fourth condition in which the distance to the external object is less than the first reference distance and is greater than the fourth reference distance less than the first reference distance is satisfied, the wearable device 103 may identify the corrected distance based on the first distance information, the second distance information, and the distance to the external object. For example, the wearable device 103 may further determine whether the distance to the external object is included in a fourth partial region. For example, the fourth partial region may represent a region (e.g., about 50 cm to about 1 m) extending from a portion of the first partial region toward the second partial region to the first reference distance. For example, the fourth partial region may be determined based on a measurable minimum distance (e.g., about 50 cm) of the RGB camera and a measurable maximum distance (e.g., about 1 m) (or the first reference distance) of the first distance sensor. The wearable device 103 may identify the corrected distance based on the first distance information, the second distance information, and the distance to the external object, in case that the distance to the external object is included in the fourth partial region (or in case that the distance to the external object is greater than or equal to the fourth reference distance (e.g., the measurable minimum distance of the RGB camera) and is less than the first reference distance). In this case, the first weight to be applied to the first distance information may be greater than the second weight to be applied to the second distance information. In contrast, in case that a second condition is satisfied, the first weight to be applied to the first distance information may be smaller than the second weight to be applied to the second distance information.

In operation 1140, the wearable device 103 may display one or more modified (or corrected) image(s) such that a visual object image (or visual object) corresponding to an external object appears (or to be perceived) as being positioned at a depth according to the corrected distance. For example, the wearable device 103 may display the modified image through a display system including at least one display. For example, the modified image may be an image corrected or reprojected from the image and subsequent modified images can continue to make depth adjustments as the user of the wearable device 103 moves or the external object moves.

For example, in case that a fifth condition that the distance to the external object is greater than or equal to the third reference distance is satisfied, the wearable device 103 may display the generated image(s) through the at least one display to appear (or to be perceived) as being positioned at the depth according to the distance to the external object. In other words, the wearable device 103 may refrain from (or skip, delay, or exclude) performing correction of the image for an external object positioned in the remaining region different from the partial regions of the region.

Although not illustrated in FIG. 11, according to an embodiment, the wearable device 103 may identify the corrected distance further based on a saliency map. For example, the wearable device 103 may calculate a weight to be applied to the distance to the external object obtained using the image, the first distance information of the first distance sensor, and the second distance information of the second distance sensor based on the saliency map including information on a user's region of interest. For example, the region of interest may be referred to as a weight region. For example, the wearable device 103 may adjust an operating ratio between at least one camera and sensors by applying the calculated weight to the distance to the external object, the first distance information, and the second distance information. In addition, for example, the wearable device 103 may identify the region of interest by further using a region (or gaze range) to which the user's gaze is directed, along with the saliency map.

According to an embodiment, the wearable device 103 may identify the weight region based on gaze region information and the saliency map. For example, the weight region may include a partial region representing a region where a first portion (e.g., the first portion 821 or 842 of FIG. 8A) of the saliency map and the gaze region information overlap. For example, the partial region may be determined based on a plurality of reference distances. For example, the weight region may be included in the first partial region (e.g., the first partial region 411 of FIG. 4), the third partial region (e.g., the third partial region 413 of FIG. 4), or the fourth partial region (e.g., the fourth partial region 414 included in the first partial region 411 of FIG. 4).

According to an embodiment, the wearable device 103 may calculate a weight for the weight region. For example, the wearable device 103 may calculate a weight (or a third weight) for the distance to the external object, a weight (or a first weight) for the first distance information (or the depth image) obtained through the first distance sensor (e.g., the first distance sensor 621 of FIG. 6B), and a weight (or the second weight) for the second distance information (or the depth image) obtained through the second distance sensor (e.g., the second distance sensor 641 of FIG. 6C). For example, the wearable device 103 may calculate at least one weight for the weight region. For example, the wearable device 103 may calculate the first weight for the first distance information, the second weight for the second distance information, and/or the third weight for the distance to the external object. However, the present disclosure is not limited thereto. According to an embodiment, the wearable device 103 may calculate at least one weight. For example, the wearable device 103 may calculate the first weight and the second weight, excluding the third weight. According to an embodiment, the wearable device 103 may identify the corrected distance by applying the weight to the distance information.

According to an embodiment, the wearable device 103 may identify the corrected distance based on scene analysis for the image obtained through at least one camera. For example, the scene analysis may include analysis based on SLAM. For example, the wearable device 103 may identify the position of each of one or more external objects in the image based on the scene analysis. For example, the wearable device 103 may store information on the position of each of the one or more external objects as scene understanding data. For example, the scene understanding data may be used in a software application executed by the wearable device 103. For example, the scene understanding data may be used for a service provided by the software application. In case that the scene understanding data is stored in a number greater than or equal to reference data number, the wearable device 103 may recognize that one or more objects of interest are positioned in a specific partial region among the partial regions. For example, the wearable device 103 may identify the specific partial region in which the one or more objects of interest are positioned as the region of interest (or weight region). For example, the object of interest may include an external object that the user is interested in. Accordingly, the wearable device 103 may calculate a weight to be applied to the distance to the external object obtained through the image, the first distance information of the first distance sensor, and the second distance information of the second distance sensor. For example, the wearable device 103 may adjust the operating ratio between the sensors by applying the calculated weight to the distance to the external object, the first distance information, and the second distance information.

According to an embodiment, the wearable device 103 may identify the corrected distance based on the user's gesture. For example, the wearable device 103 may identify the gesture or interaction by the user's hand through a sensor or a camera. In case of identifying the gesture or interaction, the wearable device 103 may identify the first partial region (e.g., the first partial region 411 of FIG. 4) as a region of interest, and accordingly calculate a weight to be applied to the distance to the external object obtained through the image and the first distance information of the first distance sensor. However, the present disclosure is not limited thereto. For example, in case of identifying the gesture or interaction, the wearable device 103 may identify the fourth partial region (e.g., the fourth partial region 414 of FIG. 4) in the first partial region as a region of interest, and calculate a weight to be applied to the distance to the external object obtained through the image, the first distance information of the first distance sensor, and the second distance information of the second distance sensor. Alternatively, for example, in case of identifying the gesture or interaction, the wearable device 103 may identify the first partial region as a region of interest, and calculate a weight to be applied to the distance to the external object obtained through the image, the first distance information of the first distance sensor, and the second distance information of the second distance sensor. In this case, for higher accuracy even in the first partial region, the wearable device 103 may identify the corrected distance to the external object by using the second distance information together with the first distance information.

According to an embodiment, in case that illuminance of the external environment is less than reference illuminance, the wearable device 103 may identify the distance to the external object of the external environment based on the second distance information of the second distance sensor instead of the image obtained from at least one camera. By comparing the distance to the external object identified based on the second distance information with the partial regions, the wearable device 103 may determine distance information to be used.

According to an embodiment, in case that a surface of the external object is composed of a material that reflects light, the wearable device 103 may calculate a weight to be applied to the image (or the distance to the external object obtained using the image) obtained through at least one camera as a relatively higher value compared to distance information obtained from the first distance sensor and the second distance sensor. In addition, in case of processing a region (e.g., a periphery (or corner) portion of the external object) where the light is scattered in the external environment, the wearable device 103 may calculate a weight to be applied to the image (or the distance obtained using the image) obtained through at least one camera as a relatively higher value compared to distance information obtained from the first distance sensor and the second distance sensor.

In the above examples of FIGS. 1 to 11, a case applied to the wearable device 103 that provides VST is described, but the present disclosure is not limited thereto. The present disclosure may also be applied to the wearable device 103 that provides an AR environment. For example, in case of displaying a visual object to be added to an external object, the wearable device 103 may identify a distance to the external object and a corrected distance, and display the visual object according to the corrected distance. For example, the visual object may be displayed by at least partially overlapping the external object or being positioned in a peripheral region of the external object. The wearable device 103 may display the visual object (or an image including the visual object, visual information) such that the visual object appears (or is perceived) as being positioned at a depth according to the corrected distance.

Referring to the described above, the device, method, and storage medium according to the present disclosure may use data obtained by using a plurality of sensors (e.g., the I-ToF sensor and the D-ToF sensor) and at least one camera (e.g., at least one RGB camera) included in the wearable device 103. For example, the device, method, and storage medium according to the present disclosure may select data to be used for correcting a distance to the external object according to a region (or the distance to the external object) in which the external object is positioned in an external environment. The device, method, and storage medium according to the present disclosure may identify the distance to the external object (or the depth of the visual object corresponding to the external object) by using at least one among an image obtained through the at least one camera or distance information obtained through the plurality of sensors. The device, method, and storage medium according to the present disclosure may reduce power consumption according to driving of the plurality of sensors by determining at least one sensor among the plurality of sensors to be used by using the distance to the external object. The device, method, and storage medium according to the present disclosure may perform correction (or reprojection) for an image to be displayed by using a more accurately identified (or corrected) distance. Accordingly, the device, method, and storage medium according to the present disclosure may improve user experience (e.g., reduce the sense of heterogeneity) by identifying an accurate distance (or depth).

A wearable device 103 as described above may comprise a memory 550, comprising one or more storage media, storing instructions. The wearable device 103 may comprise at least one processor 510 comprising processing circuitry. The wearable device 103 may comprise a plurality of sensors 530 comprising a first distance sensor and a second distance sensor. The wearable device 103 may comprise a camera system including a plurality of cameras 540. The wearable device 103 may comprise a display system including a first display and a second display. The instructions, when executed by the at least one processor 510 individually or collectively, may cause the wearable device 103 to identify, by using images of an external environment obtained through the camera system, a distance from a reference position to an external object in the external environment. The instructions, when executed by the at least one processor 510 individually or collectively, may cause the wearable device 103 to identify a corrected distance from the reference position to the external object based on the distance, first distance information of the external object obtained through the first distance sensor, and second distance information of the external object obtained through the second distance sensor, in case that the distance is greater than or equal to a first reference distance and is less than a second reference distance greater than the first reference distance. The instructions, when executed by the at least one processor 510 individually or collectively, may cause the wearable device 103 to display, through the display system, one or more modified images such that a visual object image corresponding to the external object appears as being positioned at a depth according to the corrected distance.

According to an embodiment, the instructions, when executed by the at least one processor 510 individually or collectively, may cause the wearable device 103 to identify the corrected distance from the reference position to the external object based on the distance and the first distance information, in case that the distance is less than the first reference distance.

According to an embodiment, the instructions, when executed by the at least one processor 510 individually or collectively, may cause the wearable device 103 to identify the corrected distance from the reference position to the external object based on the distance and the second distance information, in case that the distance is greater than or equal to the second reference distance and is less than a third reference distance greater than the second reference distance.

According to an embodiment, the instructions, when executed by the at least one processor 510 individually or collectively, may cause the wearable device 103 to display, through the display system, one or more generated images such that the visual object image appears as being positioned at the depth according to the distance, in case that the distance is greater than or equal to the third reference distance.

According to an embodiment, the first reference distance may be determined based on a measurable distance by the first distance sensor. The second reference distance may be determined based on a measurable distance by the camera system. The third reference distance may be determined based on a measurable distance by the second distance sensor.

According to an embodiment, the measurable distance of each of the first distance sensor, the at least one camera 540, and the second distance sensor may comprise a distance in which a difference between an estimated distance and an actual distance is less than a reference difference.

According to an embodiment, a period of obtaining the images through the camera system may have a first time interval. A period of obtaining the first distance information through the first distance sensor may have a second time interval longer than the first time interval. A period of obtaining the second distance information through the second distance sensor may have a third time interval longer than the second time interval.

According to an embodiment, in case that the distance is less than the first reference distance, the corrected distance may be calculated based on the first distance information in a frame when the first time interval is overlapped with the second time interval. In case that the distance is less than the first reference distance, the corrected distance may be adjusted from the distance by using the first distance information in another frame when the first time interval is not overlapped with the second time interval.

According to an embodiment, the instructions, when executed by the at least one processor 510 individually or collectively, may cause the wearable device 103 to identify a corrected distance from the reference position to the external object based on the distance, the first distance information, and the second distance information, in case that the distance is greater than or equal to a fourth reference distance less than the first reference distance and is less than the first reference distance. In case that the distance is greater than or equal to the fourth reference distance and is less than the first reference distance, the corrected distance may be identified by applying a first weight to the first distance information and by applying a second weight to the second distance information. In case that the distance is greater than or equal to the first reference distance and is less than the second reference distance, the corrected distance may be identified by applying a third weight to the first distance information and by applying a fourth weight to the second distance information. The first weight may be greater than the second weight. The third weight may be less than the fourth weight.

According to an embodiment, the fourth reference distance may correspond to a measurable minimum distance to the external object using the images from the plurality of cameras of the camera system.

According to an embodiment, the instructions, when executed by the at least one processor 510 individually or collectively, may cause the wearable device 103 to obtain a saliency map in which at least a portion of an image is visually highlighted according to likelihood of a gaze of a user of the wearable device 103 being positioned. The instructions, when executed by the at least one processor 510 individually or collectively, may cause the wearable device 103 to identify a weight region based on the saliency map. The instructions, when executed by the at least one processor 510 individually or collectively, may cause the wearable device 103 to determine a first weight for the first distance information and a second weight for the second distance information for the weight region. The first weight and the second weight may be used for identifying the corrected distance.

According to an embodiment, the weight region may be identified based on the distance and the saliency map or identified based on a gaze region according to the gaze and the saliency map.

According to an embodiment, the reference position may comprise a position of the plurality of cameras disposed on the wearable device 103.

According to an embodiment, each of the plurality of cameras may comprise a red-green-blue (RGB) camera. The first distance sensor may comprise an indirect-time of flight (I-ToF) sensor. The second distance sensor may comprise a direct-time of flight (D-ToF) sensor.

A method performed by a wearable device 103 as described above may comprise identifying, by using images of an external environment obtained through a camera system including a plurality of cameras of the wearable device 103, a distance from a reference position to an external object in the external environment. In case that the distance is greater than or equal to a first reference distance and is less than a second reference distance greater than the first reference distance, the method may comprise identifying a corrected distance from the reference position to the external object based on the distance, first distance information of the external object obtained through a first distance sensor of the wearable device 103, and second distance information of the external object obtained through a second distance sensor of the wearable device 103. The method may include displaying one or more modified images such that a visual object image corresponding to the external object appears as being positioned at a depth according to the corrected distance.

According to an embodiment, the method may include identifying the corrected distance from the reference position to the external object based on the distance and the first distance information, in case that the distance is less than the first reference distance.

According to an embodiment, the method may include identifying the corrected distance from the reference position to the external object based on the distance and the second distance information, in case that the distance is greater than or equal to the second reference distance and is less than a third reference distance greater than the second reference distance.

According to an embodiment, the method may include displaying one or more generated images such that the visual object image appears as being positioned at the depth according to the distance.

According to an embodiment, the first reference distance may be determined based on a measurable distance by the first distance sensor. The second reference distance may be determined based on a measurable distance by the camera system. The third reference distance may be determined based on a measurable distance by the second distance sensor.

According to an embodiment, the measurable distance of each of the first distance sensor, the at least one camera 540, and the second distance sensor may comprise a distance in which a difference between an estimated distance and an actual distance is less than a reference difference.

According to an embodiment, a period of obtaining the image through the at least one camera 540 may have a first time interval. A period of obtaining the first distance information through the first distance sensor may have a second time interval longer than the first time interval. A period of obtaining the second distance information through the second distance sensor may have a third time interval longer than the second time interval.

A non-transitory computer-readable storage medium as described above, when individually or collectively executed by at least one processor 510 of a wearable device 103 including a plurality of sensors 530 including a first distance sensor and a second distance sensor, a camera system including a plurality of cameras 540, and a display system including a first display and a second display, may store one or more programs including instructions that cause the wearable device 103 to identify, by using images of an external environment obtained through the camera system, a distance from a reference position to an external object in the external environment. The non-transitory computer-readable storage medium, when individually or collectively executed by the at least one processor 510, may store one or more programs including instructions that cause the wearable device 103 to compare the distance to the external object and a plurality of references associated with measurable distances of the sensors. The non-transitory computer-readable storage medium, when individually or collectively executed by the at least one processor 510, may store one or more programs including instructions that cause the wearable device 103 to identify a corrected distance from the reference position to the external object using the distance to the external object and at least one sensor information of the sensors. The non-transitory computer-readable storage medium, when individually or collectively executed by the at least one processor 510, may store one or more programs including instructions that cause the wearable device 103 to display, through the display system, one or more modified images such that a visual object image corresponding to the external object appears as being positioned at a depth according to the corrected distance.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device comprising:
memory, comprising one or more storage media, storing instructions;
at least one processor comprising processing circuitry;
a plurality of sensors comprising a first distance sensor and a second distance sensor;
a camera system including a plurality of cameras; and
a display system including a first display and a second display,
wherein the instructions, when executed by the at least one processor individually or collectively, cause the wearable device to:
identify, by using images of an external environment obtained through the camera system, a distance from a reference position to an external object in the external environment;
in case that the distance is greater than or equal to a first reference distance and is less than a second reference distance greater than the first reference distance, identify a corrected distance from the reference position to the external object based on the distance, first distance information of the external object obtained through the first distance sensor, and second distance information of the external object obtained through the second distance sensor; and
display, through the display system, one or more modified images such that a visual object image corresponding to the external object appears as being positioned at a depth according to the corrected distance.

2. The wearable device of claim 1,
wherein the instructions, when executed by the at least one processor individually or collectively, cause the wearable device to:
in case that the distance is less than the first reference distance, identify the corrected distance from the reference position to the external object based on the distance and the first distance information.

3. The wearable device of claim 2,
wherein the instructions, when executed by the at least one processor individually or collectively, cause the wearable device to:
in case that the distance is greater than or equal to the second reference distance and is less than a third reference distance greater than the second reference distance, identify the corrected distance from the reference position to the external object based on the distance and the second distance information.

4. The wearable device of claim 3,
wherein the instructions, when executed by the at least one processor individually or collectively, cause the wearable device to:
in case that the distance is greater than or equal to the third reference distance, display, through the display system, one or more generated images such that the visual object image appears as being positioned at the depth according to the distance.

5. The wearable device of claim 4,
wherein the first reference distance is determined based on a measurable distance by the first distance sensor,
wherein the second reference distance is determined based on a measurable distance by the camera system, and
wherein the third reference distance is determined based on a measurable distance by the second distance sensor.

6. The wearable device of claim 5,
wherein the measurable distance of each of the first distance sensor, the camera system, and the second distance sensor comprises a distance in which a difference between an estimated distance and an actual distance is less than a reference difference.

7. The wearable device of claim 1,
wherein a period of obtaining the images through the camera system has a first time interval,
wherein a period of obtaining the first distance information through the first distance sensor has a second time interval longer than the first time interval, and
wherein a period of obtaining the second distance information through the second distance sensor has a third time interval longer than the second time interval.

8. The wearable device of claim 7,
wherein, in case that the distance is less than the first reference distance, the corrected distance is calculated based on the first distance information in a frame when the first time interval is overlapped with the second time interval, and
wherein, in case that the distance is less than the first reference distance, the corrected distance is adjusted from the distance by using the first distance information in another frame when the first time interval is not overlapped with the second time interval.

9. The wearable device of claim 2,
wherein the instructions, when executed by the at least one processor individually or collectively, cause the wearable device to:
in case that the distance is greater than or equal to a fourth reference distance less than the first reference distance and is less than the first reference distance, identify the corrected distance from the reference position to the external object based on the distance, the first distance information, and the second distance information;
wherein, in case that the distance is greater than or equal to the fourth reference distance and is less than the first reference distance, the corrected distance is identified by applying a first weight to the first distance information and by applying a second weight to the second distance information,
wherein, in case that the distance is greater than or equal to the first reference distance and is less than the second reference distance, the corrected distance is identified by applying a third weight to the first distance information and by applying a fourth weight to the second distance information,
wherein the first weight is greater than the second weight, and
wherein the third weight is less than the fourth weight.

10. The wearable device of claim 9,
wherein the fourth reference distance corresponds to a measurable minimum distance to the external object using the images from the plurality of cameras of the camera system.

11. The wearable device of claim 1,
wherein the instructions, when executed by the at least one processor individually or collectively, cause the wearable device to:
obtain a saliency map in which at least a portion of an image is visually highlighted according to likelihood of a gaze of a user of the wearable device being positioned;
identify a weight region based on the saliency map; and
determine a first weight for the first distance information and a second weight for the second distance information for the weight region,
wherein the first weight and the second weight are used for identifying the corrected distance.

12. The wearable device of claim 11,
wherein the weight region is identified based on the distance and the saliency map or is identified based on a gaze region according to the gaze and the saliency map.

13. The wearable device of claim 1,
wherein each of the plurality of cameras comprises a red-green-blue (RGB) camera,
wherein the first distance sensor comprises an indirect-time of flight (I-ToF) sensor, and
wherein the second distance sensor comprises a direct-time of flight (D-ToF) sensor.

14. A method performed by a wearable device comprising:
identifying, by using images of an external environment obtained through a camera system including a plurality of cameras of the wearable device, a distance from a reference position to an external object in the external environment;
in case that the distance is greater than or equal to a first reference distance and is less than a second reference distance greater than the first reference distance, identifying a corrected distance from the reference position to the external object based on the distance, first distance information of the external object obtained through a first distance sensor of the wearable device, and second distance information of the external object obtained through a second distance sensor of the wearable device; and
displaying one or more modified images such that a visual object image corresponding to the external object appears as being positioned at a depth according to the corrected distance.

15. A non-transitory computer-readable storage medium, when individually or collectively executed by at least one processor of a wearable device comprising a plurality of sensors comprising a first distance sensor and a second distance sensor, a camera system including a plurality of cameras, and a display system including a first display and a second display, stores one or more programs including instructions that cause the wearable device to:
identify, by using images of an external environment obtained through the camera system, a distance from a reference position to an external object in the external environment;
compare the distance to the external object and a plurality of references associated with measurable distances of the sensors;
identify a corrected distance from the reference position to the external object using the distance to the external object and sensor information of the sensors; and
display, through the display system, one or more modified images such that a visual object image corresponding to the external object appears as being positioned at a depth according to the corrected distance.
